# EUROPEAN PATENT SPECIFICATION

(11) **EP 3 496 485 B1**
(45) Date of publication and mention of the grant of the patent: **18.09.2024**
(21) Application number: 17837049.0
(22) Date of filing: 03.08.2017
(51) Int. Cl.: H04W 72/04, H04W 28/06

(54) **USER TERMINAL AND WIRELESS COMMUNICATION METHOD**
BENUTZERENDGERÄT UND DRAHTLOSKOMMUNIKATIONSVERFAHREN
TERMINAL D'UTILISATEUR ET PROCÉDÉ DE COMMUNICATION SANS FIL

(30) Priority: 04.08.2016 JP 2016154018
(43) Date of publication of application: 12.06.2019
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2017/028162
(87) International publication number: WO 2018/025948

(56) References cited:
- US-A1- 2015 257 134
- US-A1- 2016 143 030
- HUAWEI ET AL: "sPDCCH design for short TTI", vol. RAN WG1, no. Nanjing, China; 20160523 - 20160527, 14 May 2016 (2016-05-14), XP051096625, Retrieved from the Internet <URL:http://www.3gpp.org/ftp/tsg_ran/WG1_RL1/TSGR1_85/Docs/> [retrieved on 20160514]
- LG ELECTRONICS: "Discussions on DCI and sPDCCH for latency reduction", vol. RAN WG1, no. Nanjing, China; 20160523 - 20160527, 14 May 2016 (2016-05-14), XP051096394, Retrieved from the Internet <URL:http://www.3gpp.org/ftp/tsg_ran/WG1_RL1/TSGR1_85/Docs/> [retrieved on 20160514]
- LG ELECTRONICS: "Physical layer aspect of processing time for shortened TTI", vol. RAN WG1, no. Busan, Korea; 20160411 - 20160415, 2 April 2016 (2016-04-02), XP051080247, Retrieved from the Internet <URL:http://www.3gpp.org/ftp/tsg_ran/WG1_RL1/TSGR1_84b/Docs/> [retrieved on 20160402]
- HUAWEI ET AL.: "sPDCCH design for short TTI", 3GPP TSG-RAN WG1#85 R1-164059, 14 May 2016 (2016-05-14), XP051096625, Retrieved from the Internet <URL:http://www.3gpp.org/ftp/tsg-ran/WG1_RL1/TSGR1_183/Docs/R1-164059.zip>
- LG ELECTRONICS: "Discussions on DCI and sPDCCH for latency reduction", 3GPP TSG-RAN WG1#85 R1-164542, 14 May 2016 (2016-05-14), XP051096394, Retrieved from the Internet <URL:http://www.3gpp.org/ftp/tsg_ran/WG1_RL1/TSGR1_658/Docs/R1-164542.zip>
- LG ELECTRONICS: "Physical layer aspect of processing time for shortened TTI", 3GPP TSG-RAN WG1#84B R1-162511, 2 April 2016 (2016-04-02), XP051080247, Retrieved from the Internet <URL:http://www.3gpp.org/ftp/tsg_ran/WG1_RL1/TSGR1_84b/Docs/R1-162511.zip>
- HUAWEI ET AL.: "Control signaling enhancements for short TTI", 3GPP TSG- RAN WG1#83 R1-156461, 15 November 2015 (2015-11-15), XP051002921, Retrieved from the Internet <URL:http://www.3gpp.org/ftp/tsg_ran/WG1_RL1/TSGR1_83/Docs/R1-156461.zip>
- NTT DOCOMO, INC: "sPDCCH for shortened TTI", 3GPP TSG-RAN WG1#85 R1-165209, 15 May 2016 (2016-05-15), XP051096136, Retrieved from the Internet <URL:http://www.3gpp.org/ftp/tsg_ran/WG1_RL1/TSGR1_1316/Docs/R1-165209.zip>

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 10 and later versions), carrier aggregation (CA), in which multiple carriers (component carriers (CCs), cells, etc.) are integrated, is introduced in order to achieve broadbandization. Every carrier is configured with the system bandwidth of LTE Rel. 8 as one unit. In addition, in CA, multiple CCs under the same radio base station (eNB (eNodeB)) are configured in a user terminal (UE (User Equipment)).

Also, in existing LTE systems (for example, LTE Rel. 12 and later versions), dual connectivity (DC), in which multiple cell groups (CGs) formed by different radio base stations are configured in a user terminal, is also introduced. Every cell group is comprised of at least one cell (CC, cell, etc.). In DC, multiple CCs of different radio base stations are integrated, so that DC is also referred to as "inter-eNB CA."

In existing LTE systems (for example, LTE Rels. 8 to 13), downlink (DL) and/or uplink (UL) communication are carried out using 1-ms transmission time intervals (TTIs). This 1-ms TTI is the unit of time it takes to transmit one channel-encoded data packet, and serves as the processing unit in scheduling, link adaptation and so on. A TTI of 1 ms is also referred to as a "subframe," a "subframe duration" and so forth.

Non-Patent Literature 2 describes sPDCCH design for short TTI.

Non-Patent Literature 3 describes DCI and sPDCCH for latency reduction. In the first sTTI, it is considered to share the same legacy PDCCH region between sPDCCH and PDCCH.

Non-Patent Literature 4 describes physical layer aspect of processing time for shortened TTI.

Patent Literature 1 describes that the frame of a mobile communication system may be configured in a transmission time interval structure shorter than that of a frame of the legacy system.

Patent Literature 2 describes that a control channel can be transmitted through two and three OFDM symbols.

### Citation List

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"
Non-Patent Literature 2: 3GPP contribution R1-164059
Non-Patent Literature 3: 3GPP contribution R1-164542
Non-Patent Literature 4: 3GPP contribution R1-162511
Patent Literature 1: US 2016/143030 A1
Patent Literature 2: US 2015/257134 A1

### Summary of Invention

### Technical Problem

Envisaging future radio communication systems (for example, 5G, NR and so on), studies are underway to support TTIs (hereinafter also referred to as "short TTIs") that are shorter than the 1-ms TTIs of existing LTE systems (hereinafter also referred to as "long TTIs"), in order to reduce latency (latency reduction).

Furthermore, future radio communication systems are expected to accommodate a variety of services such as high-speed and large-capacity communication (eMBB (enhanced Mobile Broad Band)), massive access (mMTC (massive MTC)) from devices (user terminals) for inter-device communication (M2M (Machine-to-Machine)) such as loT (Internet of Things) and MTC (Machine Type Communication), low-latency and high-reliability communication (URLLC (Ultra-Reliable and Low Latency Communication)), in a single framework. URLLC is required to provide a higher latency-reducing effect than eMBB and mMTC.

In this way, there is a likelihood that a plurality of services with different requirements for latency reduction will be co-present in future radio communication systems. So, for future radio communication systems, research is underway to support multiple TTIs (for example, long TTIs and short TTIs) of different time durations in the same carrier (CC, cell, etc.).

However, the problem when supporting multiple TTIs of varying time durations in the same carrier, lies in how to control communication. For example, when a configuration is used in which a number of short TTIs are included in a long TTI, how to configure these short TTIs is the problem. Furthermore, when downlink control information for controlling the scheduling of each TTI is transmitted via a downlink control channel, how to transmit this downlink control channel is also a problem.

The present invention has been made in view of the above, and it is therefore an object of the present invention to provide a user terminal and a radio communication method that allow adequate communication even when multiple TTIs of varying time durations are used in the same carrier.

### Solution to Problem

This object is accomplished by the subject-matter of the independent claims. The dependent claims concern particular embodiments.

### Advantageous Effects of Invention

According to the present invention, it is possible to communicate adequately even when multiple TTIs of varying time durations are used on the same carrier.

### Brief Description of Drawings

FIG. 1 is a diagram to show examples of transmission time intervals (TTIs) in existing LTE systems (Rel. 8 to 12);
FIG. 2 is a diagram to explain normal TTIs and shortened TTIs;
FIGs. 3A and 3B are diagrams to show examples of configurations of shortened TTIs;
FIG. 4 is a diagram to show an example of an allocation pattern of sTTIs;
FIG. 5 is a diagram to show another example of an allocation pattern of sTTIs;
FIG. 6 is a diagram to show another example of an allocation pattern of sTTIs;
FIG. 7 is a diagram to show a claimed embodiment of allocation patterns of sTTIs;
FIG. 8 is a diagram to show other examples of allocation patterns of sTTIs;
FIG. 9 is a diagram to show other examples of allocation patterns of sTTIs;
FIG. 10 is a diagram to show other examples of allocation patterns of sTTIs;
FIG. 11 is a diagram to show other examples of allocation patterns of sTTIs;
FIG. 12 is a diagram to show other examples of allocation patterns of sTTIs;
FIG. 13 is a diagram to show the relationship between the number of resource blocks for DL transmission and the number of PDCCH symbols;
FIG. 14 is a diagram to show other examples of allocation patterns of sTTIs;
FIG. 15 is a diagram to show other examples of allocation patterns of sTTIs;
FIG. 16 is a diagram to show other examples of allocation patterns of sTTIs;
FIG. 17 is a diagram to show other examples of allocation patterns of sTTIs;
FIG. 18 is a diagram to show other examples of allocation patterns of sTTIs;
FIG. 19 is a diagram to show other examples of allocation patterns of sTTIs;
FIGs. 20A and 20B are diagrams to show examples of sPDCCH allocation methods;
FIGs. 21A and 21B are diagrams to show examples of sPDCCH allocation methods;
FIG. 22 is a diagram to show an example of a table in which the number of symbols allocated to sPDCCH is defined;
FIGs. 23A and 23B are diagrams to show examples of sPDCCH allocation methods;
FIGs. 24A and 24B are diagrams to show examples of sPDCCH allocation methods;
FIG. 25 is a diagram to show an example of a schematic structure of a radio communication system according to the present embodiment;
FIG. 26 is a diagram to show an example of an overall structure of a radio base station according to the present embodiment;
FIG. 27 is a diagram to show an example of a functional structure of a radio base station according to the present embodiment;
FIG. 28 is a diagram to show an example of an overall structure of a user terminal according to the present embodiment;
FIG. 29 is a diagram to show an example of a functional structure of a user terminal according to the present embodiment; and
FIG. 30 is a diagram to show an example hardware structure of a radio base station and a user terminal according to one embodiment of the present invention.

### Description of Embodiments

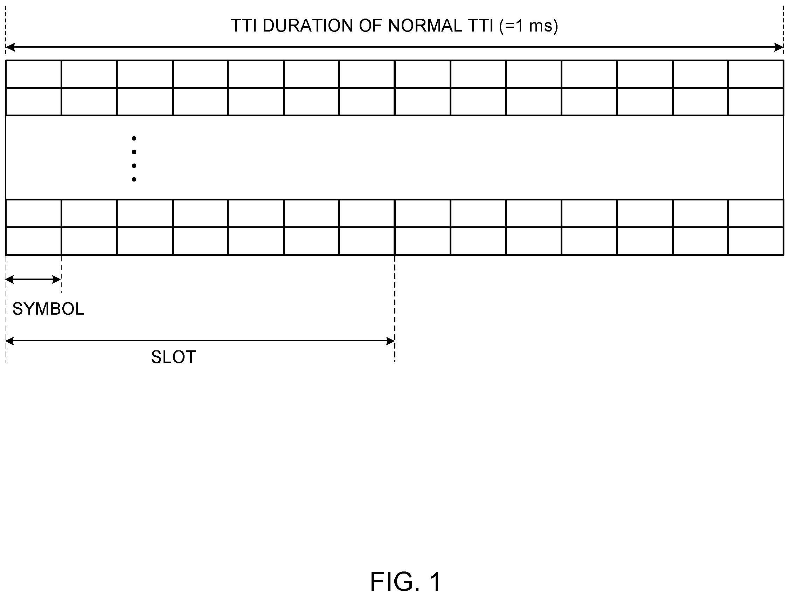

FIG. 1 is a diagram to explain an example of a transmission time interval (TTI) for existing systems (LTE Rel. 8 to 12). As shown in FIG. 1, in LTE Rel. 8 to 12, a TTI (hereinafter referred to as a "normal TTI") has a time duration of 1 ms. A normal TTI is also referred to as a "subframe," and is comprised of two time slots. A TTI is the unit of time it takes to transmit one channel-encoded data packet (transport block), and serves as the processing unit in scheduling, link adaptation, and so on.

As shown in FIG. 1, when normal cyclic prefixes (CPs) are used in the downlink (DL), a normal TTI is comprised of 14 OFDM (Orthogonal Frequency Division Multiplexing) symbols (seven OFDM symbols per slot). Each OFDM symbol has a time duration (symbol duration) of 66.7 µs, and a normal CP of 4.76 µs is appended. Since the symbol duration and the subcarrier spacing are reciprocal to each other, the subcarrier spacing is 15 kHz when the symbol duration is 66.7 µs.

Also, when normal cyclic prefixes (CPs) are used in the uplink (UL), a normal TTI is comprised of 14 SC-FDMA (Single Carrier Frequency Division Multiple Access) symbols (seven SC-FDMA symbols per slot). Each SC-FDMA symbol has a time duration (symbol duration) of 66.7 µs, and a normal CP of 4.76 µs is appended. Since the symbol duration and the subcarrier spacing are reciprocal to each other, the subcarrier spacing is 15 kHz when the symbol duration is 66.7 µs.

Note that, when enhanced CPs are used, a normal TTI may include 12 OFDM symbols (or 12 SC-FDMA symbols). In this case, each OFDM symbol (or each SC-FDMA symbol) has a time duration of 66.7 µs, and an enhanced CP of 16.67 µs is appended.

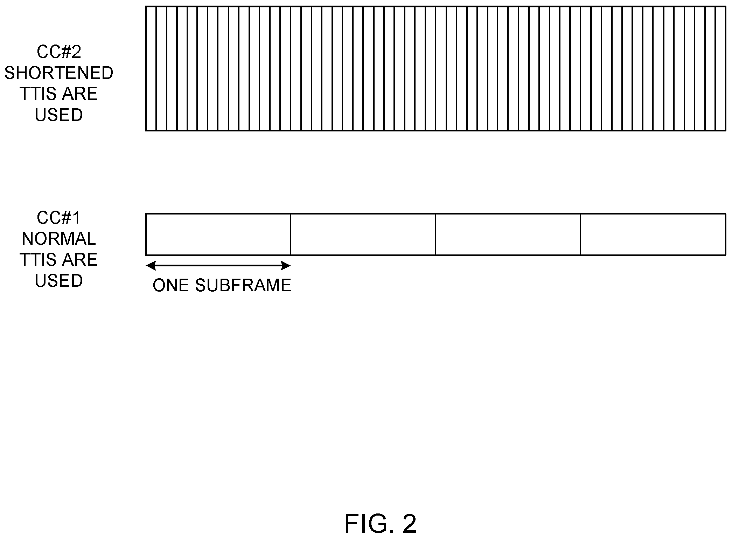

FIG. 2 is a diagram to show an example of a case where communication is performed using shortened TTIs, the TTI duration of which is made shorter than 1 ms. FIG. 2 shows a cell (CC #1) using normal TTIs (1 ms) and a cell (CC #2) using shortened TTIs.

When shortened TTIs are used, it may be possible to change the subcarrier spacing (for example, expand the subcarrier spacing) from that of subcarriers of normal TTIs. When TTIs having a shorter time duration than normal TTIs (hereinafter referred to as "shortened TTIs") are used, the time margin for processing in user terminals and radio base stations (for example, coding, decoding, etc.) increases, so that the processing latency can be reduced. Also, when shortened TTIs are used, it is possible to increase the number of user terminals that can be accommodated per unit time (for example, 1 ms). Now, shortened TTIs' configurations and/or others will be described in detail below.

### (Example of Configuration of Shortened TTIs)

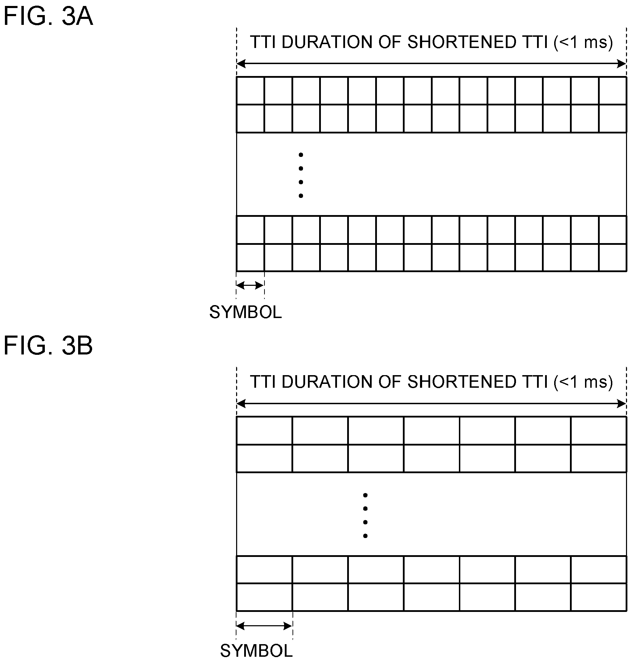

Now, examples of configurations of shortened TTIs will be described with reference to FIGs. 3. As shown in FIGs. 3A and 3B, shortened TTIs have a time duration (TTI duration) shorter than 1 ms. Shortened TTIs may have one TTI duration or a number of TTI durations that, when multiplied, become 1 ms, such as 0.5 ms, 0.25 ms, 0.2 ms, 0.1 ms and so on. Alternatively, given that a normal TTI contains fourteen symbols when normal CPs are used, normal TTIs may have one TTI duration or a number of TTI durations that, when multiplied, become an integral multiple of 1/14 ms, such as 7/14 ms, 4/14 ms, 3/14 ms, 2/14 ms and 1/14 ms. Furthermore, given that a normal TTI contains twelve symbols when enhanced CPs are used, normal TTIs may have one TTI duration or a number of TTI durations that, when multiplied, become an integral multiple of 1/12 ms, such as 6/12 ms, 4/12 ms, 3/12 ms, 2/12 ms and 1/12 ms.

Also when shortened TTIs are used, as in conventional LTE, whether to use normal CPs or use enhanced CPs can be configured by way of higher layer signaling, such as broadcast information and RRC signaling. By this means, it is possible to introduce shortened TTIs while maintaining compatibility (synchronization) with 1-ms normal TTIs.

Note that, although FIGs. 3A and 3B illustrate example cases of using normal CPs, the present invention is not limited to these. Shortened TTIs have only to have a shorter time duration than normal TTIs, and the number of symbols in a shortened TTI, the duration of symbols, the duration of CPs and suchlike configurations are not critical. Furthermore, although examples will be described below in which OFDM symbols are used in the DL and SC-FDMA symbols are used in the UL, the present invention is not limited to these.

FIG. 3A is a diagram to show a first configuration example of shortened TTIs. As shown in FIG. 3A, in the first configuration example, a shortened TTI is comprised of 14 OFDM symbols (or SC-FDMA symbols), which is equal in number to a normal TTI, and each OFDM symbol (each SC-FDMA symbol) has a symbol duration shorter than the symbol duration of a normal TTI (= 66.7 µs).

As shown in FIG. 3A, when maintaining the number of symbols in a normal TTI and shortening the duration of symbols, physical layer signal configurations (arrangement of REs and/or others) for normal TTIs can be reused. In addition, when maintaining the number of symbols in a normal TTI, it is possible to include, in a shortened TTI, the same amount of information (the same amount of bits) as in a normal TTI.

Also, since the symbol duration and the subcarrier spacing are each the reciprocal of the other, when the duration of symbols is made short as in FIG. 3A, the subcarrier spacing becomes wider than the 15-kHz subcarrier spacing of normal TTIs. When the subcarrier spacing becomes wider, it is possible to effectively prevent the inter-channel interference that is caused by the Doppler shift when the user terminal moves, the deterioration of communication quality due to phase noise in user terminals' receivers and so on. In particular, in high frequency bands such as bands of several tens of GHz, the deterioration of communication quality can be effectively prevented by expanding the subcarrier spacing.

FIG. 3B is a diagram to show a second configuration example of a shortened TTI. As shown in FIG. 3B, according to the second configuration example, a shortened TTI is comprised of a smaller number of OFDM symbols (or SC-FDMA symbols) than a normal TTI, and each OFDM symbol (each SC-FDMA symbol) has the same symbol duration (= 66.7 µs) as a normal TTI. In this case, the shortened TTI can be formed with symbol units of a normal TTI (that is, can be formed with a reduced number of symbols). For example, a shortened TTI can be formed by using part of the fourteen symbols included in one subframe. In FIG. 3B, a shortened TTI is comprised of seven OFDM symbols (SC-FDMA symbols), which is half of a normal TTI.

As shown in FIG. 3B, when maintaining the duration of symbols and reducing number of symbols, the amount of information (the amount of bits) to be included in a shortened TTI can be reduced lower than a normal TTI. Therefore, a user terminal can perform receiving processes (for example, demodulation, decoding and so on) for information included in shortened TTIs in a shorter time than normal TTIs, so that the processing latency can be shortened. Moreover, by making the duration of symbols the same as in existing systems, shortened-TTI signals and normal-TTI signals can be frequency-multiplexed in the same system band (or carrier, cell, CC, etc.), so that compatibility with normal TTIs can be maintained.

For example, when frame configuration type 1 (FDD) is employed, a downlink control channel (also referred to as an "sPDCCH," for example) and/or a downlink shared channel (also referred to as an "sPDSCH," for example) may be transmitted using shortened sTTIs (sTTIs) for existing systems, which are comprised of two symbols and/or one slot. Also, in frame configuration type 1 (FDD), an uplink control channel (also referred to as an "sPUCCH," for example) and/or an uplink shared channel (also referred to as an "sPUSCH," for example) can be transmitted using sTTIs comprised of, at least one of, two symbols, four symbols and one slot. Alternatively, when frame configuration type 2 (TDD) is employed, it is possible to transmit at least one of an sPDCCH, an sPDSCH, an sPUCCH and an sPUSCH by using sTTIs comprised of one slot.

In this way, for the future radio communication systems, studies are under way to support multiple TTIs of varying time durations in the same carrier. However, the problem when supporting multiple TTIs of varying time durations in the same carrier lies in how to control communication. For example, when a configuration is used in which a number of short TTIs (shortened TTIs) are included in a long TTI (normal TTI), how to configure these short TTIs is the problem. In addition, when downlink control information (sDCI) for controlling the scheduling of each short TTI is transmitted via a downlink control channel (sPDCCH), how to transmit this downlink control channel is the problem.

So, the present inventors have focused on the point that the time field where an existing downlink control channel, which is transmitted every long TTI, is allocated changes every long TTI, and come up with the idea of controlling the allocation of a downlink control channel for short TTIs depending on in which time field the existing downlink control channel is allocated.

To be more specific, depending on in which time field a downlink control channel (PDCCH) is allocated, a user terminal controls receipt of a downlink control channel (sPDCCH) for short TTIs. Note that saying that a user terminal controls receipt of an sPDCCH based on the time field a PDCCH is allocated, may refer to using configurations that allow the user terminal to control the sPDCCH's receiving processes based on sPDCCH allocation information, which is reported from the radio base station depending on the time field the PDCCH is allocated.

Also, the present inventors have come up with the idea of controlling the allocation pattern of multiple short TTIs contained in a long TTI based on at least one of the time field in which an existing downlink control channel is allocated, whether or not a downlink control channel for short TTIs is allocated in the time field of the existing downlink control channel, and the TTI duration of the downlink control channel for short TTIs.

Now, embodiments of the present invention will be described below in detail with reference to the accompanying drawings. According to the present embodiment, a short TTI (second TTI) can be configured in any way as long as its time duration is shorter than a long TTI (first TTI). Although examples in which a short TTI is comprised of fewer symbols than a long TTI, and in which each symbol has the same symbol duration as in a long TTI will be described below, these example can be adequately applied even when a short TTI adopts a symbol duration that is different from that of a long TTI.

Also, according to the present embodiment, long TTIs and/or short TTIs can be applied to DL communication, in which user terminals receive signals from radio base stations, UL communication, in which user terminals transmit signals to radio base stations, and side-link (SL) receipt or transmission in inter-terminal communication (D2D (Device to Device) communication), in which signals are transmitted and received between user terminals. In the following description, when reference is made simply to "DL communication," this may include SL receipt. Likewise, in case reference is made simply to "UL communication," this may include SL transmission. Following this manner, when simply "DL data" and/or "UL data" are mentioned, SL data may be included.

Also, a user terminal, according to the present embodiment, may be a user terminal to use long TTIs and short TTIs, or may be a user terminal to use either long TTIs or short TTIs.

### (First Aspect)

In accordance with a first aspect of the present invention, the method for configuring sTTIs and an sPDCCH in the event a downlink control channel (sPDCCH) for short TTIs (sTTIs) can be allocated to an existing PDCCH field will be described. In the following description, a case where the time field for an sTTI is constituted by two symbols and a case where the time field for an sTTI is constituted by seven symbols (one slot) will be exemplified, but the number of symbols applicable to sTTIs is not limited to this.

### <When sTTI is Two Symbols>

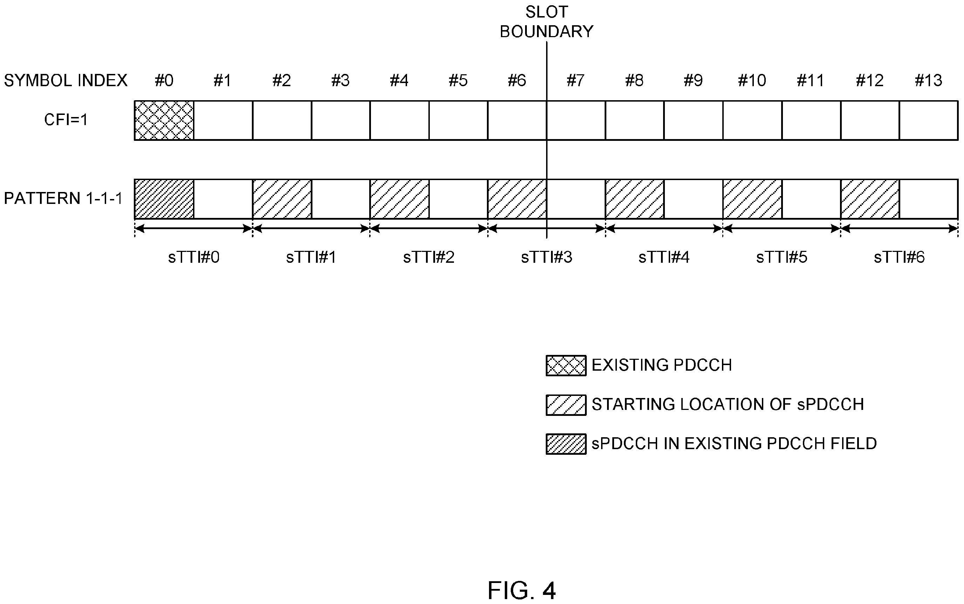

FIG. 4 is a diagram to show an example of the method of configuring an existing PDCCH, an sPDCCH and sTTIs in a subframe. An existing PDCCH is placed in a predetermined number of symbols (for example, any of one to three symbols) from the top of a subframe, per long TTI. In the case shown in FIG. 4, an existing PDCCH is allocated to the first symbol of a subframe (CFI=1).

The sTTIs, in which the TTI duration is two symbols, can be placed from the top of the subframe. In this case, up to seven sTTIs (sTTI #0 to #6) can be placed in one subframe (long TTI). In addition, downlink control information that commands scheduling of sTTIs can be transmitted using the sPDCCH allocated to the first-half symbol of each sTTI.

In this case, the radio base station controls allocation so that a PDCCH and an sPDCCH are multiplexed in the first-half symbol (symbol #0) of sTTI #0 located at the top of the subframe. The PDCCH and the sPDCCH can be multiplexed based on at least one of FDM, TDM, CDM and so on. Also, assume that the PDCCH and the sPDCCH are transmitted using the same antenna port, and a user terminal may demodulate the sPDCCH using the same cell-specific reference signal (CRS) as that of the PDCCH. In this case, transmission encoding diversity technique such as SFBC and/or others may be used depending on the number of CRS-transmitting antenna ports. Also, in the event an sPDCCH is multiplexed over a PDCCH symbol, the sPDCCH may be formed with units of resource element groups (REGs), like the PDCCH, and the same interleaving as that applied to the PDCCH may be applied to the sPDCCH. By making these arrangements, an sPDCCH and a PDCCH can be readily multiplexed on the same symbol so as not to collide with each other.

FIG. 4 shows a case where a given sTTI (here sTTI #3) provided in a subframe is placed across the slot boundary (placed to cross the slot boundary) in the subframe (pattern 1-1-1). In this way, sTTIs can be allocated flexibly regardless of slot boundaries.

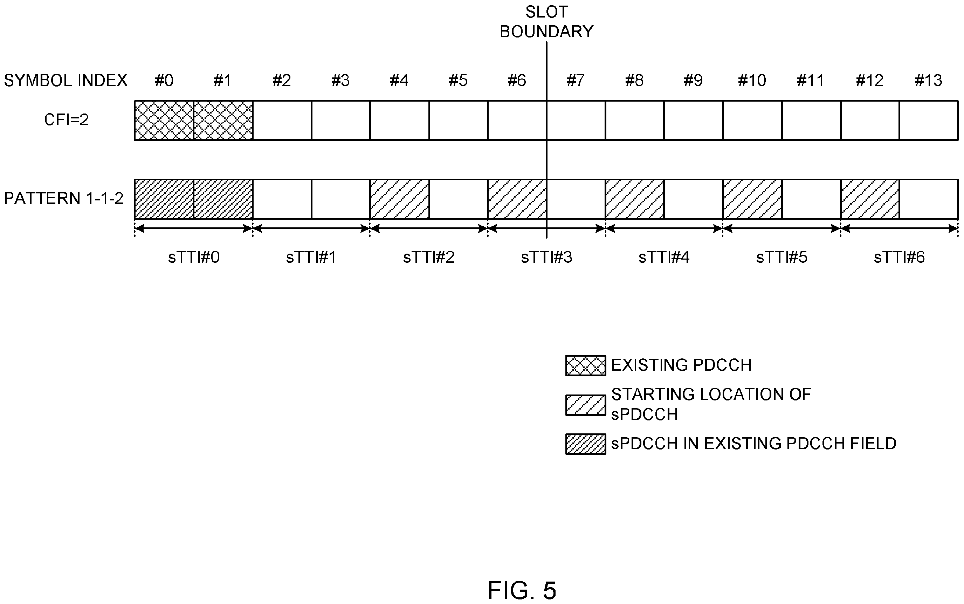

FIG. 5 shows a case where an existing PDCCH is allocated from the top of a subframe to the second symbol (CFI=2) (pattern 1-1-2). In this case, the existing PDCCH is placed in two symbols constituting sTTI #0, which is located at the top of the subframe. The radio base station can control the allocation so that data is not allocated to (scheduled in) this sTTI #0. The user terminal can control the receiving operation on assumption that no data is allocated to this sTTI #0.

The radio base station may execute allocation so that a PDCCH and an sPDCCH are multiplexed in sTTI #0 (symbols #0 and #1). In this case, the radio base station may transmit an sPDCCH, which commands allocation of data to sTTI #1 (symbols #2 and #3), using symbol #0 and/or symbol #1 of sTTI #0. The user terminal can perform receiving processes on assumption that scheduling-commanding downlink control information that addresses sTTI #1 is included in the sPDCCH that is transmitted in sTTI #0 (symbol #0 and/or symbol #1).

For example, FIG. 5 shows a case where downlink control information that commands scheduling of sTTI #1 is included in the sPDCCH allocated to sTTI #0 (symbols #0 and #1) and transmitted, and where no sPDCCH is allocated to sTTI #1. In this case, it is possible to make the resource for allocating an sPDCCH in sTTI #1 (symbol #2) unnecessary, so that the efficiency of the use of resources can be improved.

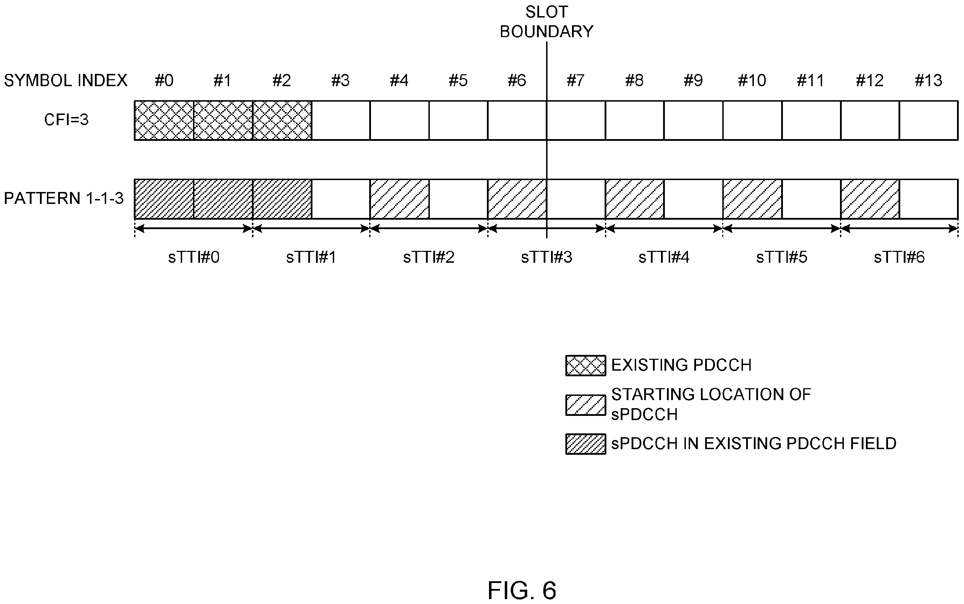

FIG. 6 shows a case where an existing PDCCH is allocated from the top of a subframe to the third symbol (CFI=3) (pattern 1-1-3). In this case, the existing PDCCH is placed in two symbols constituting sTTI #0, which is located at the top of the subframe, and the first-half symbol of sTTI #1. Consequently, the radio base station can control the allocation so that data is not allocated to (scheduled in) this sTTI #0. The user terminal can control the receiving operation on assumption that no data is allocated to this sTTI #0.

The radio base station may execute allocation so that a PDCCH and an sPDCCH are multiplexed in sTTI #0 (symbols #0 and #1) and in the first-half field (symbol #2) of sTTI #0. In this case, the radio base station may transmit an sPDCCH that schedules sTTI #1 (symbol #3) by using part or all of symbols #0 and #1, which constitute sTTI #0, and symbol #2, which constitutes sTTI #1. The user terminal can perform receiving processes on assumption that downlink control information to command scheduling for sTTI #1 is included in the sPDCCH that is transmitted in one of symbols #0 to #2.

Note that control may be exerted here so that sTTI #0 is not used (for example, no sPDCCH is allocated) when an existing PDCCH is allocated to two or more symbols from the top of a subframe (CFI=2 or greater).

### <Variation of Allocation Method>

FIG. 4 to FIG. 6 above show cases where a given sTTI (for example, sTTI #3) is placed across the boundary between two slots constituting a subframe (slot boundary), but it is equally possible to place an sTTI not to cross the slot boundary. By this means, scheduling can be readily controlled in units of slots. For example, even if there is a user terminal that executes frequency hopping (also referred to as "interleaving," "distribution," and so on) of allocating PRBs between slots, there is no need to change the PRBs constituting a predetermined sTTI that crosses the slot boundary (for example, sTTI #3) between symbols, so that degradation of demodulation performance can be prevented.

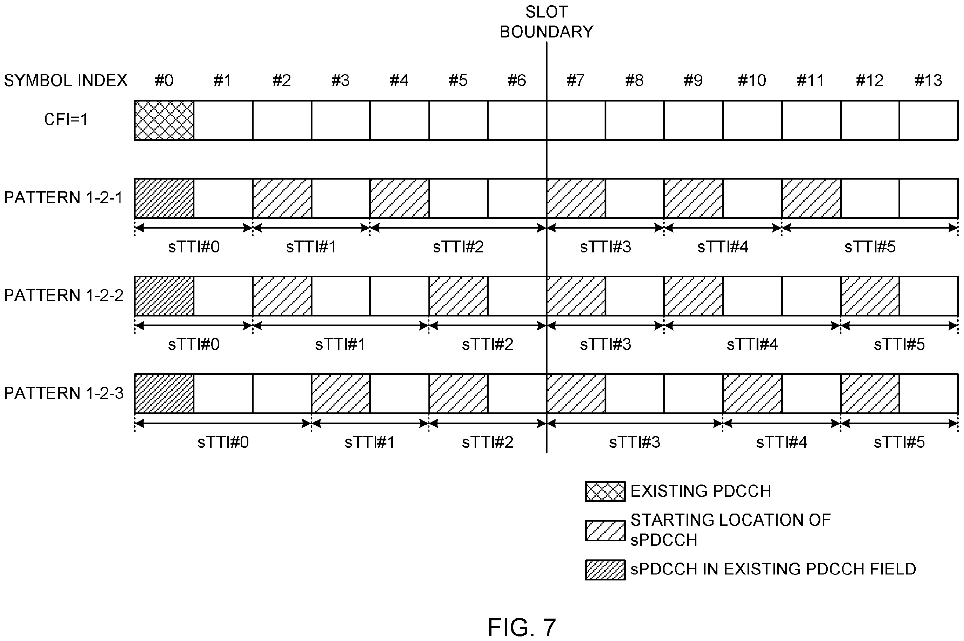

FIG. 7 is a diagram to show examples of methods of configuring sPDCCHs and sTTIs where no sTTI crosses the slot boundary. FIG. 7 shows cases where an existing PDCCH is allocated to the first one symbol of a subframe (CFI=1).

To place the sTTIs not to cross the slot boundary, a structure is employed here in which predetermined sTTIs are placed at the top of the subframe (first-half slot) and at the top of the second-half slot. In this case, if sTTIs that each correspond to two symbols are placed in each slot (seven symbols), one symbol remains. Consequently, one of the sTTIs may be associated with three symbols and configured. Alternatively, all sTTIs may be made two symbols, and the user terminal may perform receiving processes on assumption that symbols not belonging to any sTTI are blank (meaning that no sPDSCH or sPDCCH is placed).

FIG. 7 shows a structure in which three symbols are associated with sTTI #2 and sTTI #5, placed at the end of each slot (pattern 1-2-1), a structure in which three symbols are associated with sTTI #1 and sTTI #4, placed in the middle of each slot (pattern 1-2-2), and a structure in which three symbols are associated with sTTI #0 and sTTI #3, placed at the top of each slot (pattern 1-2-3). In this way, by placing the same number of sTTI symbols in the first-half slot and in the second-half slot, the location of the symbol where the user terminal starts blind decoding the sPDCCH in each sTTI can be made common between slots. This makes it possible to reduce the processes the user terminal has to perform in relationship to blind decoding of the sPDCCH, to reduce the circuit scale, and to reduce the battery consumption. Obviously, the number of sTTI symbols to place in the first-half slot and the second-half slot may be configured separately.

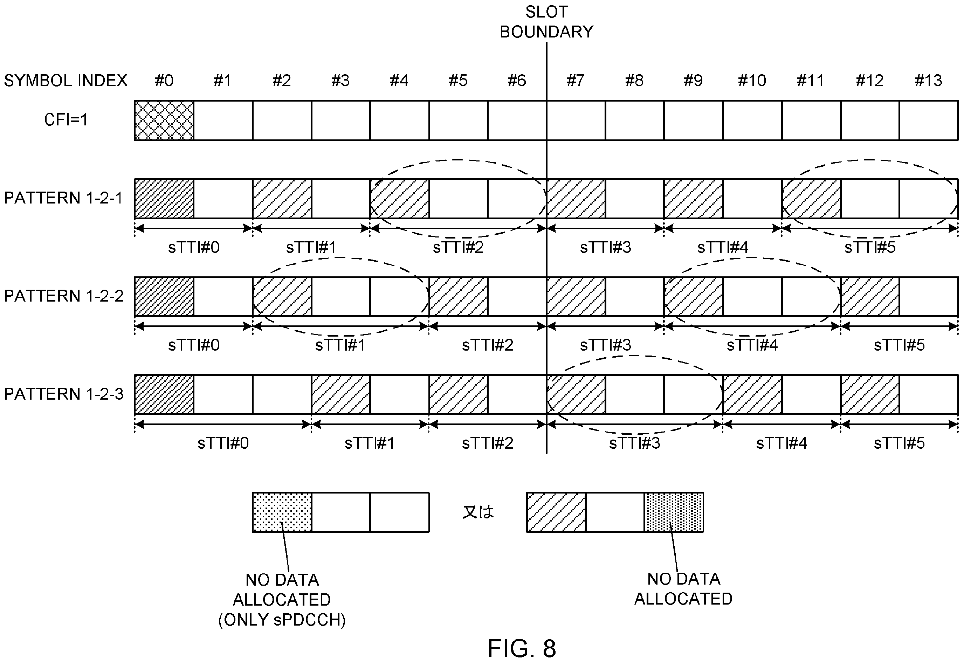

Also, when an sTTI is associated with three symbols, it naturally follows that this sTTI can be configured to transmit DL data using more than two symbols. In this case, the sTTI may be configured so that an sPDCCH is allocated to one of two symbols (for example, the first symbol), and DL data is allocated to two symbols (for example, the second and third symbols) (see FIG. 8). That is, instead of allocating DL data, an sPDCCH alone may be allocated to the first symbol. In this case, a lot of resources can be reserved to map the sPDCCH, so that the sPDCCH's received quality can be improved. Also, given that no sPDCCH is multiplexed over the symbols of DL data, the efficiency of DL data resources can be improved compared to when other two-symbol sTTIs are used.

Alternatively, when an sTTI is associated with three symbols, the number of symbols to use for DL transmission (sPDCCH, DL data and so on) may be kept at two (for example, the first and second symbols from the top), and the rest of the symbols (for example, the third symbol from the top) may not be used (see FIG. 8). In this case, the sTTI, regardless of where it is located, can be subject to receiving and demodulation processes as a two-symbol sTTI, so that it is possible to reduce the processes in the user terminal, reduce the circuit scale, and reduce the battery consumption. Note that, in the following description, the structures of FIG. 8 can be used when an sTTI is associated with three symbols.

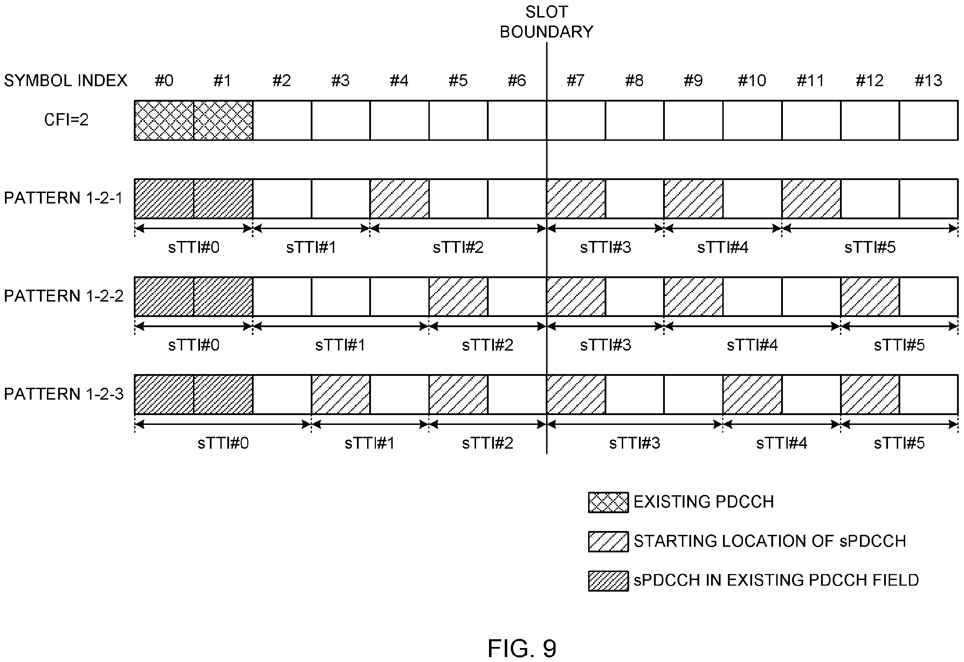

FIG. 9 shows cases where an existing PDCCH is allocated from the top of a subframe to the second symbol (CFI=2).

In this case, in patterns 1-2-1 and 1-2-2, an existing PDCCH is placed in the two symbols that constitute sTTI #0, located at the top of a subframe. Consequently, the radio base station can control the allocation so that data is not allocated to this sTTI #0. The user terminal can control the receiving operation on assumption that no data is allocated to this sTTI #0.

Note that the radio base station may execute allocation so that a PDCCH and an sPDCCH are multiplexed in sTTI #0 (symbols #0 and #1). In this case, the radio base station may transmit an sPDCCH (sDCI) that schedules sTTI #1 (symbols #2 and #3) by using symbol #0 and/or symbol #1 of sTTI #0. The user terminal can perform receiving processes on assumption that scheduling-commanding downlink control information that addresses sTTI #1 is included in the sPDCCH that is transmitted in sTTI #0 (symbol #0 and/or symbol #1).

Furthermore, in pattern 1-2-3, sTTI #0, located at the top of a subframe, can be associated with three symbols, so that the radio base station can allocate data to this sTTI #0 (for example, symbol #2). In this case, the radio base station can transmit an sPDCCH that commands allocation of data to sTTI #0 (symbol #2), by using symbol #0 and/or symbol #1 of sTTI #0.

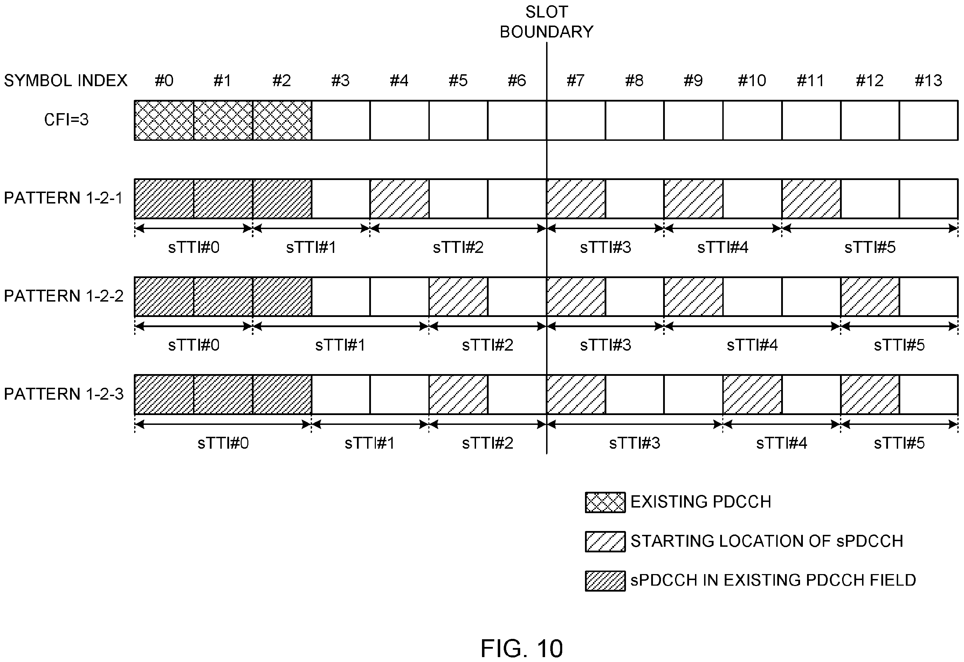

FIG. 10 shows a case where an existing PDCCH is allocated from the top of a subframe to the third symbol (CFI=3).

In this case, in pattern 1-2-3, too, an existing PDCCH is placed in symbols that constitute sTTI #0, located at the top of a subframe. Consequently, the radio base station can control the allocation so that data is not allocated to this sTTI #0. The user terminal can control the receiving operation on assumption that no data is allocated to this sTTI #0.

The radio base station may transmit an sPDCCH that commands allocation of data to sTTI #1 by using at least one of symbols #0 to #2. The user terminal can perform receiving processes on assumption that downlink control information to command scheduling of sTTI #1 is included in the sPDCCH that is transmitted in at least one of symbols #0 to #2.

Note that, although the user terminal learns the number of PDCCH symbols in each subframe based on the PCFICH (CFI) transmitted in the first symbol of each subframe, the user terminal may learn the number of PDCCH symbols, semi-statically, based on RRC signaling, instead of the CFI. At this time, based on the number of PDCCH symbols learned, the user terminal may select an sTTI pattern, in which the number of PDCCH symbols matches the number learned, from sTTI patterns including the sTTI patterns described so far, and perform receiving processes accordingly. In this case, the location of the symbol where the sPDCCH receiving and decoding processes start in each sTTI can be determined based on the sTTI pattern.

### <When sTTI is One Slot>

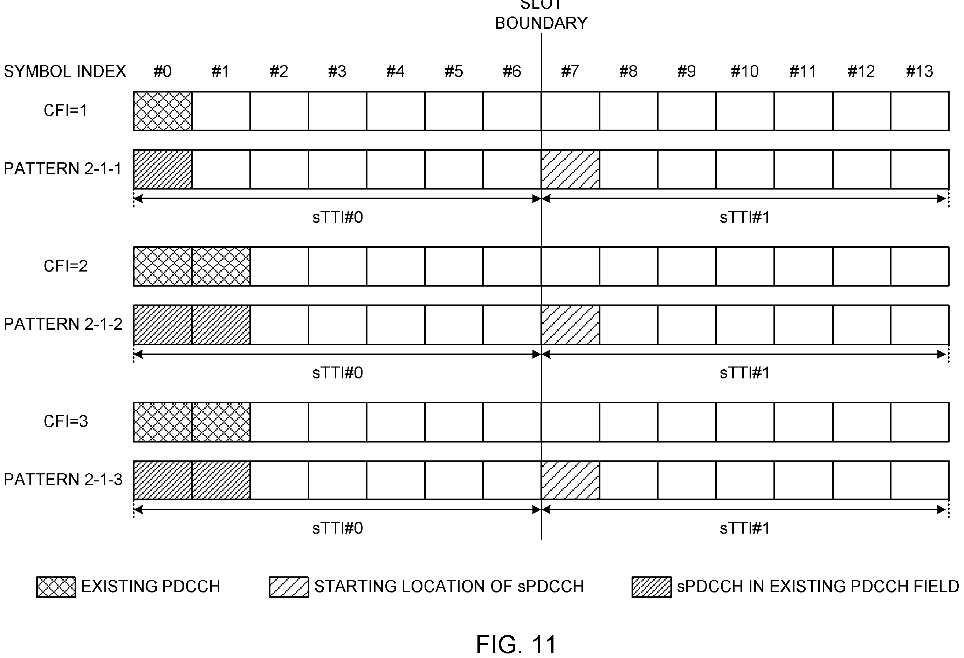

FIG. 11 is a diagram to show examples of methods of configuring an existing PDCCH, an sPDCCH and sTTIs (one slot) in a subframe. FIG. 11 shows a case where an existing PDCCH is allocated to the first one symbol of a subframe (CFI=1), a case where an existing PDCCH is allocated from the top of a subframe to the second symbol (CFI=2), and a case where an existing PDCCH is allocated from the top of a subframe to the third symbol (CFI=3).

If the TTI duration of sTTIs is made one slot, sTTIs (here, sTTIs #0 and #1) to be placed in a subframe can be placed not to cross the slot boundary in the subframe. Thus, even when short TTIs are used, scheduling can be controlled on a per slot basis.

sTTIs of a TTI duration of one slot (seven symbols) can be placed in both the first-half slot (first slot) and the second-half slot (second slot) that constitute a subframe. In this case, a structure is employed in which two sTTIs (sTTIs #0-#1) are placed in one subframe (long TTI). An sPDCCH to transmit downlink control information that commands scheduling of sTTIs can be allocated to symbols constituting each sTTI.

The radio base station can control the allocation so that an existing PDCCH and an sPDCCH are multiplexed in sTTI #0, which is placed in the first-half slot. The PDCCH and the sPDCCH can be multiplexed using at least one of FDM, TDM, CDM and others. Furthermore, the field (time field) where the sPDCCH is allocated may be configured in association with the field (CFI) where the PDCCH is allocated.

Meanwhile, the sPDCCH-allocating field in sTTI #1, placed in the second-half slot, may be determined independently of the PDCCH-allocating field. FIG. 11 shows a case where the sPDCCH-allocating field in sTTI #1 is one symbol (here, symbol #7) irrespective of the PDCCH-allocating field (CFI).

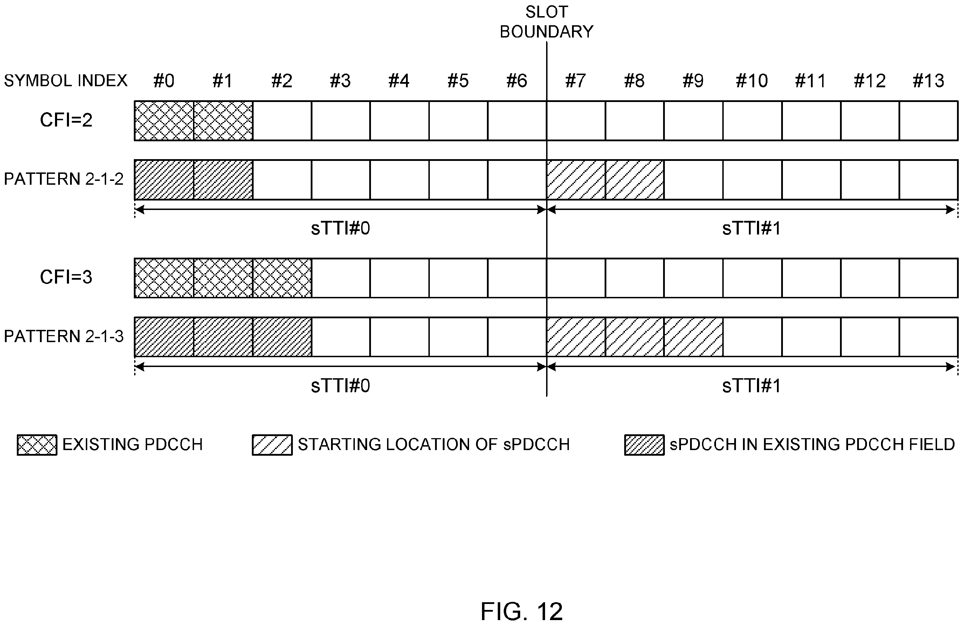

Note that the field for allocating an sPDCCH, provided in sTTI #1, needs not be one symbol, and can be changed as appropriate. For example, as shown in FIG. 12, in sTTI #1, an sPDCCH may be placed up to the second symbol or the third symbol from the top of the second-half slot. The sPDCCH-allocating field provided in sTTI #1, which is placed in the second-half slot, may be configured via higher layer signaling such as RRC signaling, or may be configured in alignment with the allocation field (for example, the CFI) in sTTI #0, which is placed in the first-half slot.

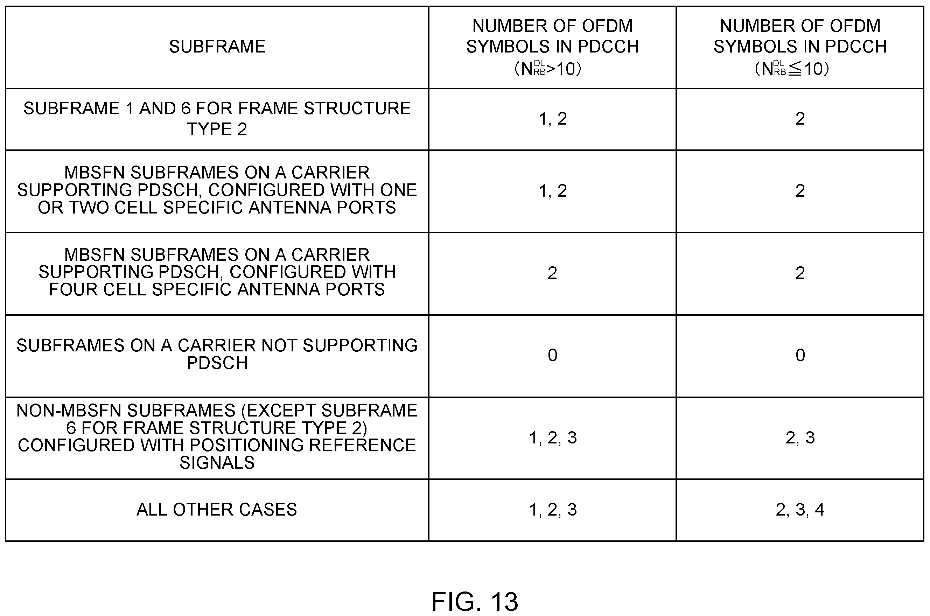

In existing systems, the number of OFDM symbols occupied by the PDCCH is determined depending on, for example, the number of RBs (N_{RB}^{DL}) occupied by DL transmission (see FIG. 13). For example, when the number of RBs is ten or less, the number of PDCCH symbols is two or more, and four at maximum (one is not applicable). Therefore, according to the first aspect of the present invention, it is possible to identify the field for allocating an sPDCCH (that is, judge whether or not this field is two symbols or greater), located at the top of a subframe, based on the number of RBs configured for use for DL transmission. For example, if the number of RBs configured for use for DL transmission is ten or less, the user terminal can judge that the sPDCCH-allocating field configured in sTTI #0 is two symbols or greater (one symbol is not applicable), and control receiving processes accordingly.

### (Second Aspect)

In accordance with a second aspect of the present invention, the method of configuring sTTIs and sPDCCHs for use when a downlink control channel (sPDCCH) for short TTIs (sTTIs) is not allocated to an existing PDCCH field (that is, not transmitted in the time field of an existing PDCCH) will be described. In the following description, a case where the time field for an sTTI is constituted by two symbols and a case where it is constituted by seven symbols (one slot) will be exemplified, but these cases are by no means limiting. According to the second aspect, an sPDCCH and a PDCCH can be multiplexed so as to be orthogonal to each other in time, so that the sPDCCH can be precoded differently than the PDCCH, the sPDCCH can adopt a channel structure that is totally different from that of the PDCCH, and so on. By this means, more flexible sTTI control can be performed.

### <When sTTI is Two Symbols>

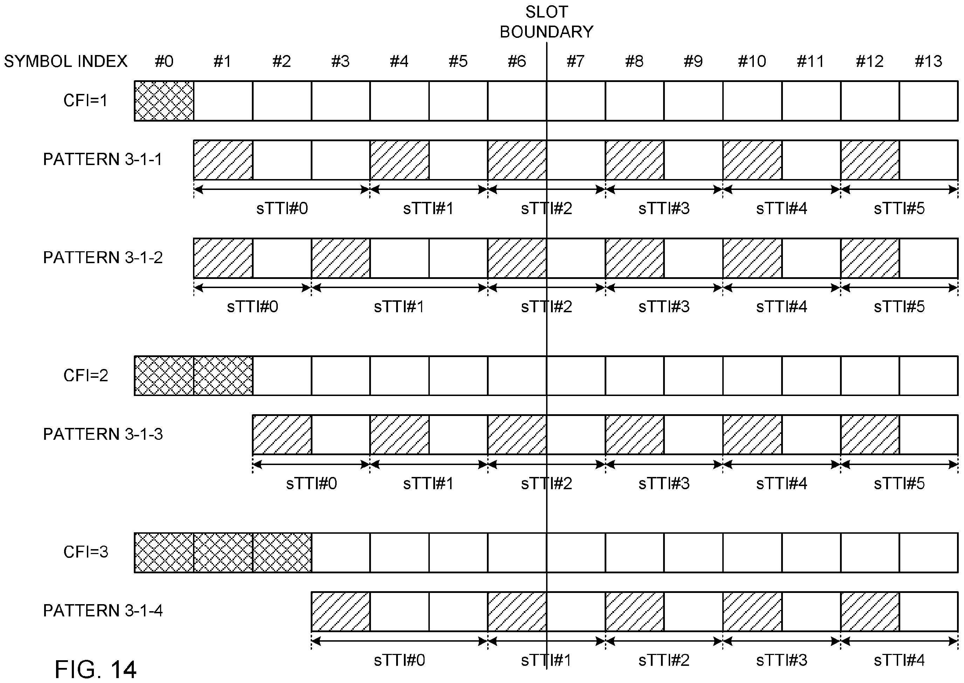

FIG. 14 is a diagram to show examples of methods of configuring an existing PDCCH, sPDCCHs and sTTIs in a subframe. FIG. 14 shows a case where an existing PDCCH is allocated to the first one symbol of a subframe (CFI=1), a case where an existing PDCCH is allocated from the top of a subframe to the second symbol (CFI=2), and a case where an existing PDCCH is allocated from the top of a subframe to the third symbol (CFI=3).

sTTIs can be placed from the symbol after the time field (for example, symbol) the PDCCH is allocated. For example, if the CFI shows 1, it is possible to start placing sTTIs from symbol #1. In this case, up to six sTTIs (sTTIs #0 to #5) can be placed in one subframe, not including the PDCCH-allocating field (here, symbol #0). Also, sPDCCHs, which transmit downlink control information that commands scheduling of sTTIs, can be allocated from the top symbol (or the first-half symbol) of each sTTI. Obviously, sPDCCHs can be allocated in the second-half symbol, not the top symbol, of each sTTI.

FIG. 14 shows cases where a given sTTI (sTTI #2 in the event of CFI=1 and 2, sTTI #1 in the event of CFI=3, and so on), provided in a subframe, is placed across the slot boundary (to cross the slot boundary) in the subframe. By this means, sTTIs can be allocated flexibly irrespective of slot boundaries.

In the event of CFI=1, the number of symbols where the PDCCH is not allocated (and where sTTIs can be placed) is thirteen. In this case, one of the sTTIs may be configured in association with three symbols. For example, a structure may be employed here in which sTTI #0, which is placed first among a number of sTTIs, is associated with three symbols (pattern 3-1-1). Alternatively, a structure may be employed in which an sTTI that comes after sTTI #0 (for example, sTTI #1) is associated with three symbols (pattern 3-1-2).

In the event of CFI=2, the number of symbols where the PDCCH is not allocated (and where sTTIs can be placed) is twelve. In this case, a structure may be employed in which sTTIs #0 to #5 are each associated with two symbols (pattern 3-1-3).

In the event of CFI=3, the number of symbols where the PDCCH is not allocated (and where sTTIs can be placed) is eleven. In this case, one of the sTTIs may be configured in association with three symbols. For example, a structure may be employed here in which sTTI #0, which is placed first among a number of sTTIs, is associated with three symbols (pattern 3-1-4). Alternatively, a structure may be employed in which an sTTI that comes after sTTI #0 is associated with three symbols.

### <Variations of Allocation Patterns>

Although cases have been described above with reference to FIG. 14 where sTTIs are placed across the boundary between two slots that constitute a subframe (slot boundary), it is equally possible to arrange sTTIs so that no one sTTI crosses the slot boundary (sTTIs are confined and placed within slots). By this means, scheduling can be readily controlled in units of slots. For example, even if there is a user terminal that executes frequency hopping (also referred to as "interleaving," "distribution," and so on) of allocating PRBs between slots, there is no need to change the PRBs of a predetermined sTTI that crosses the slot boundary (for example, sTTI #2) between symbols, so that degradation of demodulation performance can be prevented.

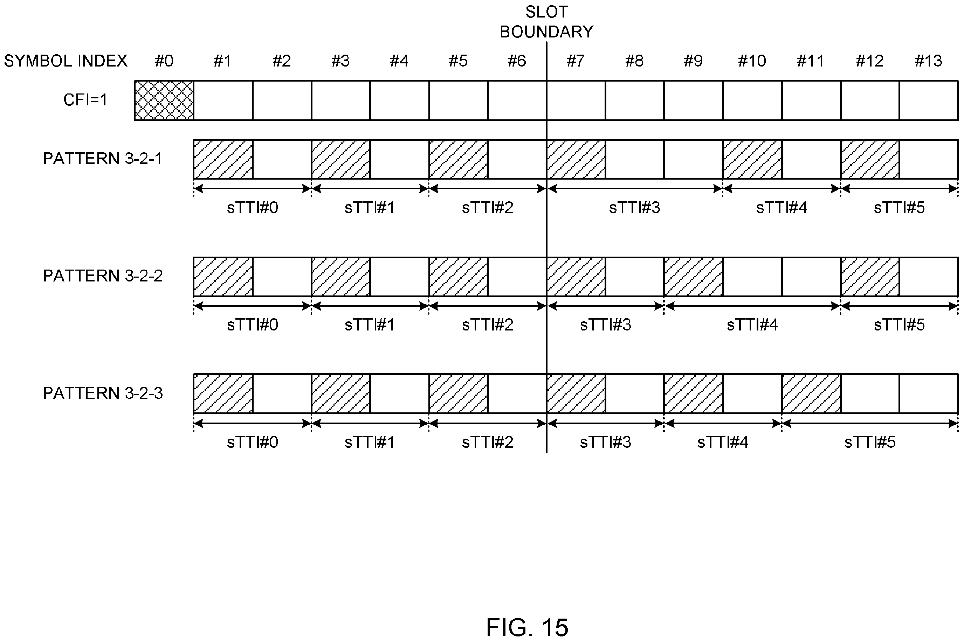

FIG. 15 is a diagram to show examples of methods of configuring sPDCCHs and sTTIs, for use when sTTIs are placed to be confined within each slot. FIG. 15 shows cases where an existing PDCCH is allocated to the first one symbol of a subframe (CFI=1).

When sTTIs are to be placed not to cross slot boundaries, in the first-half slot of a subframe, sTTIs are placed in fields other than the field where the PDCCH is allocated. In the second-half slot of the subframe, sTTIs can be placed from the first symbol (symbol #7 in FIG. 15).

In the event of CFI=1, the number of symbols where sTTIs can be placed in the first-half slot is six. In this case, a structure may be employed in which sTTIs #0 to #2, placed in the first-half slot, are each associated with two symbols. Meanwhile, the number of symbols where sTTIs can be placed in the second-half slot is seven. In this case, one of sTTIs #3 to #5, placed in the second-half slot, may be configured in association with three symbols.

FIG. 15 shows a structure in which sTTI #3, placed at the top of the second-half slot, is associated with three symbols (pattern 3-2-1), a structure in which sTTI #4, placed at the center of the second-half slot, is associated with three symbols (pattern 3-2-2), and a structure in which sTTI #5, placed at the end of the second-half slot, is associated with three symbols (pattern 3-2-3). The pattern to apply may be configured on a fixed basis, or may be configured in a variable manner. Also, different patterns may be applied on a per user terminal basis. In this case, it is possible to distribute sPDCCH resources, and improve the capacity per carrier.

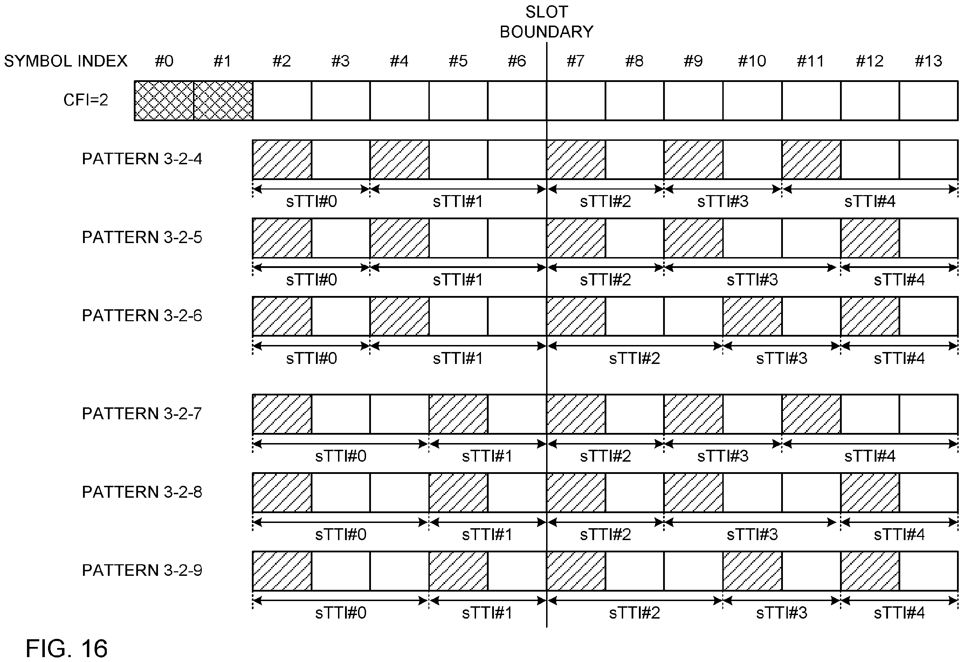

In the event of CFI=2, the number of symbols where sTTIs can be placed in the first-half slot is five (see FIG. 16). In this case, one of sTTIs #0 and #1, placed in the first-half slot, may be configured in association with three symbols. Also, the number of symbols where sTTIs can be placed in the second-half slot is seven as in the event of CFI=1. In this case, one of sTTIs #2 to #4, placed in the second-half slot, may be configured in association with three symbols.

FIG. 16 shows a structure, in which sTTI #1, placed at the end of the first-half slot, and sTTI #4, placed at the end of the second-half slot, are each associated with three symbols, (pattern 3-2-4), a structure, in which sTTI #1, placed at the end of the first-half slot, and sTTI #3, placed at the center of the second-half slot, are each associated with three symbols (pattern 3-2-5), and a structure, in which sTTI #1, placed at the end of the first-half slot, and sTTI #2, placed at the top of the second-half slot, are each associated with three symbols (pattern 3-2-6).

Also, FIG. 16 shows a structure, in which sTTI #0, placed at the top of the first-half slot, and sTTI #4, placed at the end of the second-half slot, are each associated with three symbols (pattern 3-2-7), a structure, in which sTTI #0, placed at the top of the first-half slot, and sTTI #3, placed at the center of the second-half slot, are each associated with three symbols (pattern 3-2-8), and a structure, in which sTTI #0, placed at the top of the first-half slot, and sTTI #2, placed at the top of the second-half slot, are each associated with three symbols (pattern 3-2-9). The pattern to apply may be configured on a fixed basis, or may be configured in a variable manner.

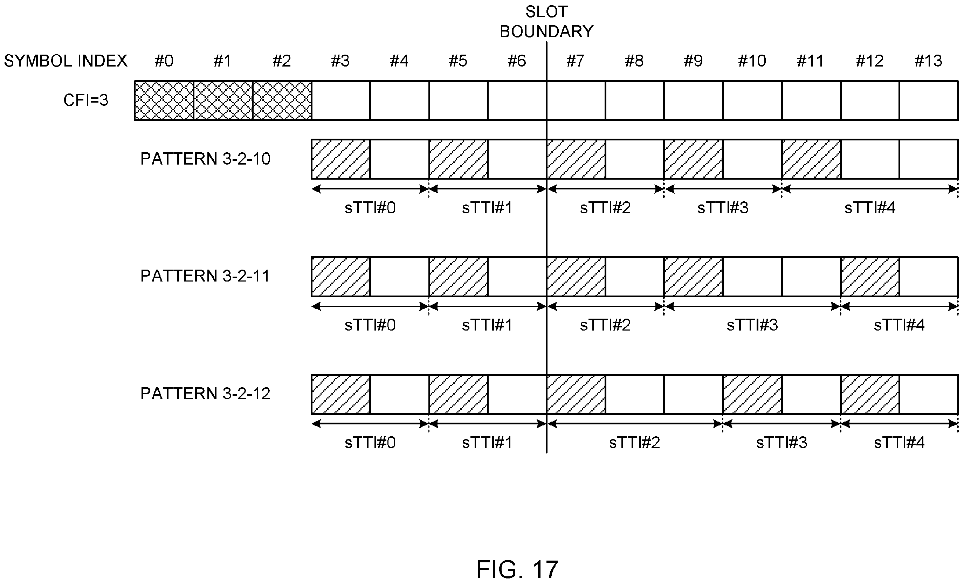

In the event of CFI=3 (see FIG. 17), the number of symbols where sTTIs can be placed in the first-half slot is four. In this case, a structure may be employed in which sTTIs #0 and #1, placed in the first-half slot, are associated with two symbols. Meanwhile, the number of symbols where sTTIs can be placed in the second-half slot is seven. In this case, one of sTTI #2 to #4, placed in the second-half slot, may be configured in association with three symbols.

FIG. 17 shows a structure, in which sTTI #4, placed at the end of the second-half slot, is associated with three symbols (pattern 3-210), a structure, in which sTTI #3, placed at the center of second-half slot, is associated with three symbols (pattern 3-2-11), and a structure, in which sTTI #2, placed at the top of second-half slot, is associated with three symbols (pattern 3-2-12). The pattern to apply may be configured on a fixed basis, or may be configured in a variable manner.

### <When sTTI is One Slot>

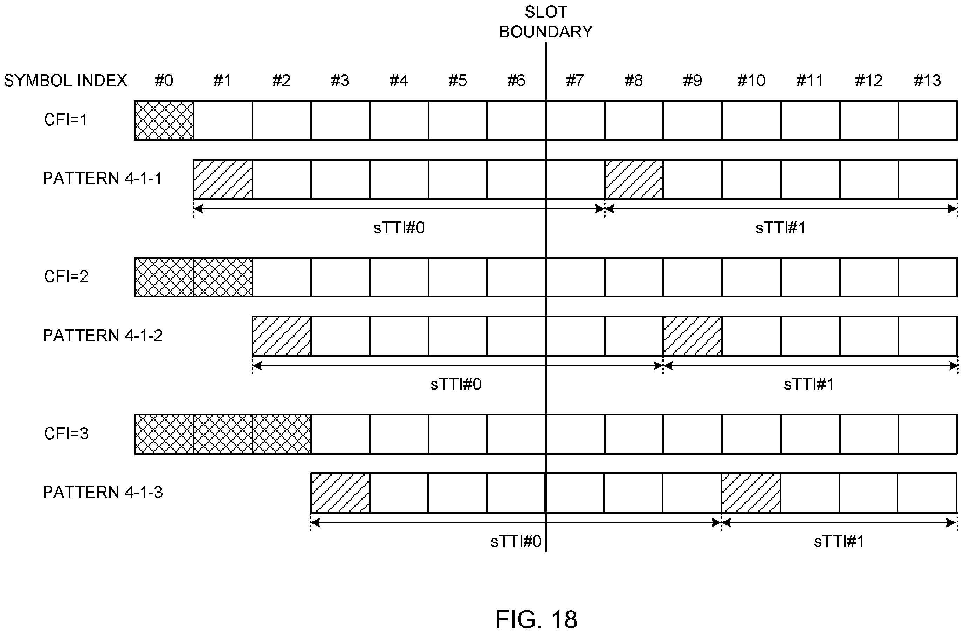

FIG. 18 is a diagram to show examples of methods of configuring an existing PDCCH, sPDCCHs and sTTIs (one slot) in a subframe. FIG. 18 shows a case where an existing PDCCH is allocated to the first symbol of a subframe (CFI=1), a case where an existing PDCCH is allocated from the top of a subframe to the second symbol (CFI=2), and a case where an existing PDCCH is allocated from the top of a subframe to the third symbol (CFI=3).

FIG. 18 shows cases where a given sTTI (here, sTTI #0) provided in a subframe is placed across the slot boundary (to cross the slot boundary) within the subframe.

In the event of CFI=1, the number of symbols where the PDCCH is not allocated (and where sTTIs can be placed) is thirteen. In this case, one of two sTTIs #0 and #1 can be configured in association with seven symbols, and the other sTTI can be configured in association with six symbols. For example, sTTI #0, which is the first one to be placed between two sTTIs, can be configured in association with seven symbols (pattern 4-1-1).

In the event of CFI=2, the number of symbols where the PDCCH is not allocated (and where sTTIs can be placed) is twelve. In this case, one of two sTTIs #0 and #1 can be configured in association with seven symbols, and the other sTTI can be configured in association with five symbols. For example, sTTI #0, which is the first one to be placed between two sTTIs, can be configured in association with seven symbols (pattern 4-1-2). Alternatively, two sTTIs #0 and #1 may be each associated with six symbols.

In the event of CFI=3, the number of symbols where the PDCCH is not allocated (and where sTTIs can be placed) is eleven. In this case, one of two sTTIs #0 and #1 can be configured in association with seven symbols, and the other sTTI can be configured in association with four symbols. For example, sTTI #0, which is the first one to be placed between two sTTIs, can be configured in association with seven symbols (pattern 4-1-3). Alternatively, one of two sTTIs #0 and #1 may be associated with six symbols, and the other one may be associated with five symbols.

In this manner, the sTTI that is located in the first half is associated with seven symbols, so that the capacity of the first-half sTTI contained in a subframe can be increased. It then follows that, when the radio base station determines the scheduling of data on a per subframe basis, by allowing more to be scheduled in the first-half sTTI of each subframe, it is possible to reduce delays in scheduling as viewed from user terminals.

### <Variation of Allocation Method>

Although cases have been described above with reference to FIG. 18 where sTTIs are placed across the boundary between two slots that constitute a subframe (slot boundary), it is equally possible to arrange sTTIs so that no one sTTI crosses the slot boundary.

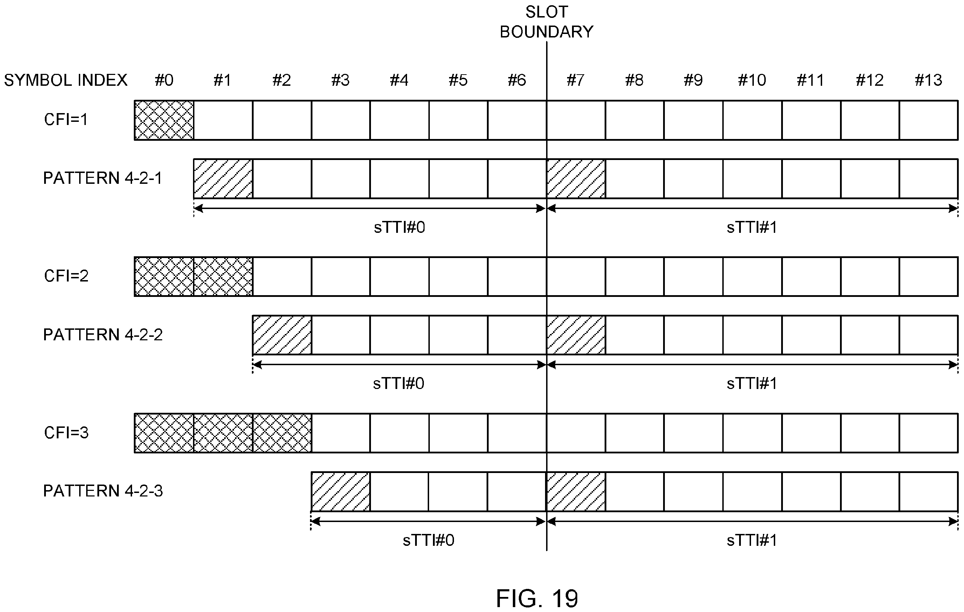

FIG. 19 is a diagram to show an example of a method for configuring sPDCCH and sTTI when no sTTI crosses the slot boundary. FIG. 19 shows a case where an existing PDCCH is allocated to the first symbol of a subframe (CFI=1), a case where an existing PDCCH is allocated from the top of a subframe to the second symbol (CFI=2), and a case where an existing PDCCH is allocated from the top of a subframe to the third symbol (CFI=3).

To place sTTIs not to cross the slot boundary, in the first-half slot of a subframe, an sTTI is placed in fields (for example, symbols) other than the field where the PDCCH is allocated. In the second-half slot of the subframe, one sTTI (for example, sTTI #1) can be placed.

In the event of CFI=1, the number of symbols where an sTTI can be placed in the first-half slot is six. In this case, sTTI #0, placed in the first-half slot, can be associated with six symbols (pattern 4-2-1). Meanwhile, the number of symbols where an sTTI can be placed in the second-half slot is seven. In this case, sTTI #1, placed in the second-half slot, is configured in association with seven symbols.

In the event of CFI=2, the number of symbols where an sTTI can be placed in the first-half slot is five. In this case, sTTI #0, placed in the first-half slot, can be configured in association with five symbols (pattern 4-2-2). Meanwhile, the number of symbols where an sTTI can be placed in the second-half slot is seven. In this case, sTTI #1, placed in the second-half slot, is configured in association with seven symbols.

In the event of CFI=3, the number of symbols where an sTTI can be placed in the first-half slot is four. In this case, sTTI #0, placed in the first-half slot, can be configured in association with four symbols (pattern 4-2-3). Meanwhile, the number of symbols where an sTTI can be placed in the second-half slot is seven. In this case, sTTI #1, placed in the second-half slot, is configured in association with seven symbols.

In this way, scheduling can be controlled in units of slots by confining and configuring sTTIs within slots. Also, the symbols of the sTTI that is placed in the second-half slot can be configured irrespective of the field where the PDCCH is allocated (CFI value). Furthermore, since it becomes easy to schedule DL data in units of slots, it is possible to reduce delays in scheduling as viewed from user terminals.

### (Third Aspect)

In accordance with a third aspect of the present invention, the method of reporting the pattern of allocating sTTIs (configuration method) and/or the pattern of allocating sPDCCHs in each sTTI to user terminals will be described.

The pattern of allocating sTTIs and/or the pattern of allocating sPDCCHs can be reported from the radio base station to user terminals by an explicit and/or implicit reporting method. Higher layer signaling (for example, RRC signaling, broadcast information, and so on) and/or downlink control information (for example, existing DCI (slow DCI) and so on) can be used as explicit reporting methods. As for implicit reporting methods, method in which user terminals make decisions based on blind decoding, the conditions of the physical layer, and so on can be used.

For example, a user terminal can identify the field (the number of symbols) where an existing PDCCH is allocated, by using predetermined physical signaling (PCFICH) and/or higher layer signaling. As for the method of reporting the field for allocating an existing PDCCH through higher layer signaling, operations of SCells in existing carrier aggregation can be used. Hereinafter, examples of methods of configuring/reporting resources (time resources and frequency resources) for allocating sPDCCHs will be described with reference to the accompanying drawings. Note that each reporting method may be applied individually or in combination.

### (Reporting Method 1)

The radio base station can configure the allocation of time resources (time-domain resource allocation) for sPDCCHs in user terminals on a semi-static basis or on a fixed basis. For example, the radio base station configures time resource for sPDCCHs in user terminals via higher layer signaling. Alternatively, resources may be configured in advance, on a fixed basis, by specification.

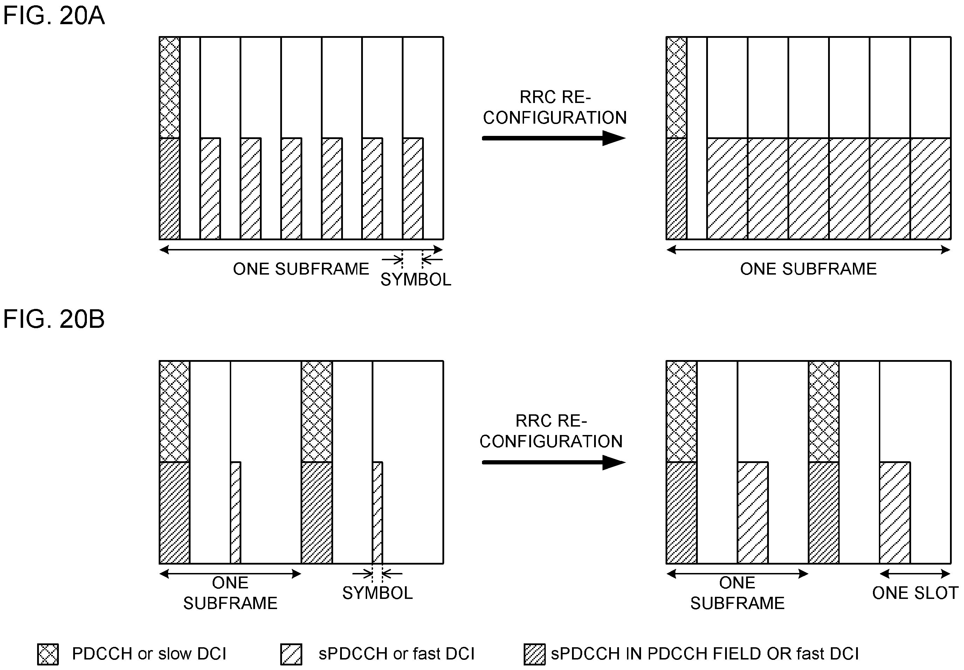

FIGs. 20 show examples of configuring (or re-configuring) time resources for sPDCCHs in user terminals via higher layer signaling. FIG. 20A shows a case where an sTTI is constituted by two symbols, and FIG. 20B shows a case where an sTTI is constituted by one slot. Also, FIGs. 20 show cases where sTTIs are allowed to be allocated to the PDCCH field (first aspect).

When sTTIs are each constituted by two symbols, the sPDCCH in each sTTI can be allocated using one or two symbols. When sTTIs are constituted by one slot, the sPDCCH in each sTTI can be allocated using one to three symbols, or one slot. Note that sPDCCHs and DL data (for example, sPDSCH) can be multiplexed using at least one of FDM, TDM and CDM, or using a combination of these.

FIG. 20A shows a case where, when an sPDCCH is configured in one symbol in sTTIs in which an existing PDCCH is allocated (for example, sTTI #1 to #6), this one symbol is changed to two symbols by higher layer signaling. Note that, when an sTTI (for example, sTTI #0) is configured in a field to overlap with the field where an existing PDCCH is allocated, the time resource for the sPDCCH in that sTTI may be configured based on the field the PDCCH is allocated (CFI) (as when allocated in the same field as the existing PDCCH).

FIG. 20B shows a case where, when an sPDCCH is configured in one symbol in sTTIs in which an existing PDCCH is allocated (for example, sTTI #1 to #6), this one symbol is changed to three symbols by higher layer signaling. Note that, when an sTTI (for example, sTTI #0) is configured in a field to overlap with the field where an existing PDCCH is allocated, the time resource for the sPDCCH in that sTTI may be configured based on the field the PDCCH is allocated (CFI) (as when allocated in the same field as the existing PDCCH).

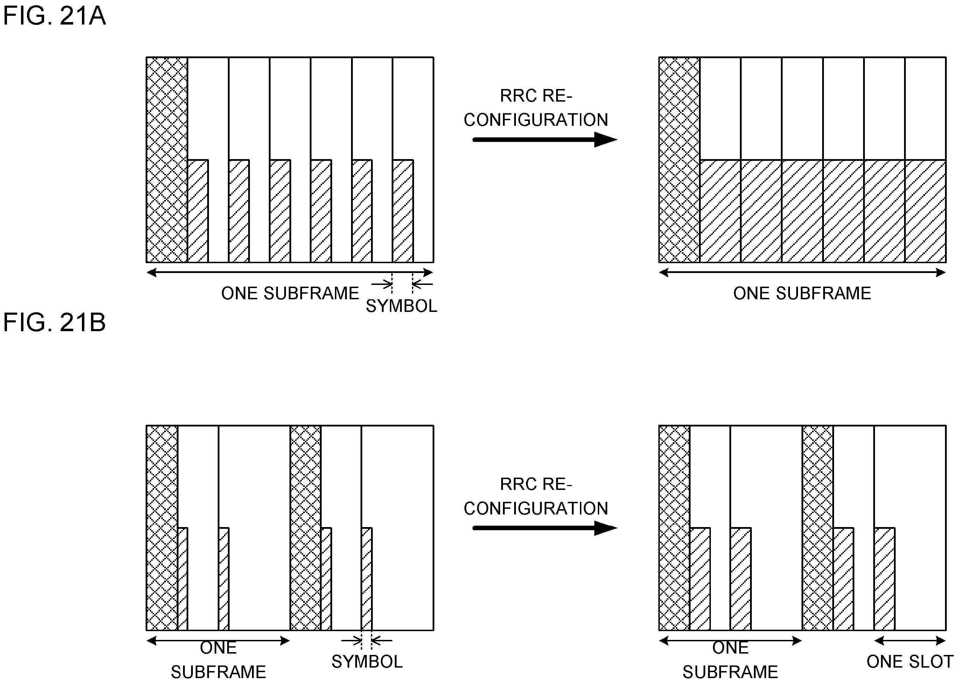

FIGs. 21 show cases where sTTIs are not allowed to be allocated in the PDCCH field (second aspect). FIG. 21A shows a case where an sTTI is constituted by two symbols, and FIG. 21B shows a case where an sTTI is constituted by one slot.

When an sTTI is constituted by two symbols, the sPDCCH in each sTTI can be allocated using one or two symbols. If an sTTI is constituted by one slot, the sPDCCH in each sTTI can be allocated using one to three symbols, or one slot. Note that sPDCCHs and DL data (for example, sPDSCH) can be multiplexed using at least one of FDM, TDM and CDM, or using a combination of these.

FIG. 21A shows a case where, when an sPDCCH is configured in one symbol in sTTIs (for example, sTTI #1 to #5), this one symbol is changed to two symbols by higher layer signaling. FIG. 21B shows a case where, when an sPDCCH is configured in one symbol in sTTIs (for example, sTTI #0 to #1), this one symbol is changed to two symbols by higher layer signaling.

A user terminal can receive the sPDCCH in each sTTI based on information related to allocation of sPDCCHs, which is reported via higher layer signaling.

### (Reporting Method 2)

The radio base station can configure the allocation of time resources for sPDCCHs, in user terminals, on a dynamic basis. For example, the radio base station configures time resources for sPDCCHs, in user terminals, by using downlink control information (also referred to as "slow DCI"), which is contained in an existing PDCCH, other L1/L2 control information, and so on. Note that information related to time resources may be included in downlink control information in the sTTI that overlaps with the field where the PDCCH is allocated.

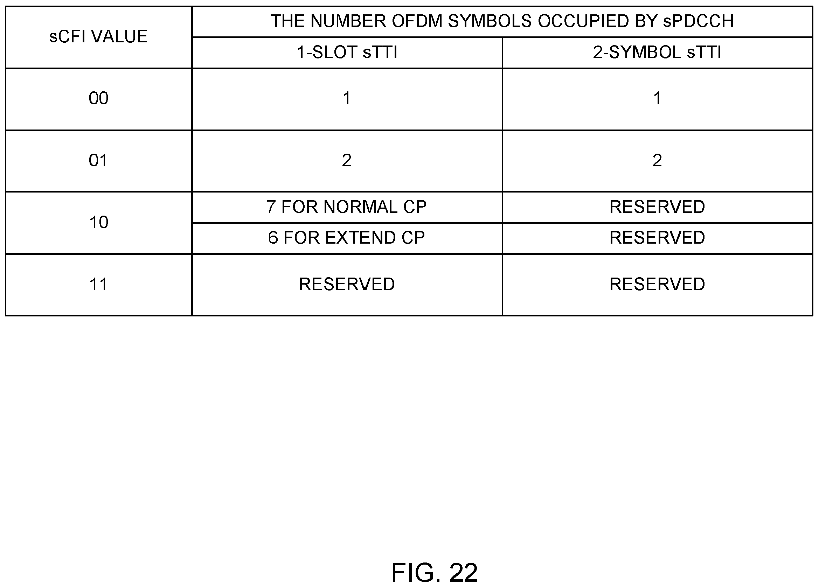

FIG. 22 shows an example of a table, in which sCFI values, which report the sPDCCH-allocating field (for example, the number of symbols), and bit values are stipulated. The radio base station can include the sCFI in downlink control information and report this to a user terminal. Based on the sCFI included in the downlink control information, the user terminal identifies the time resource for the sPDCCH allocated in each sTTI.

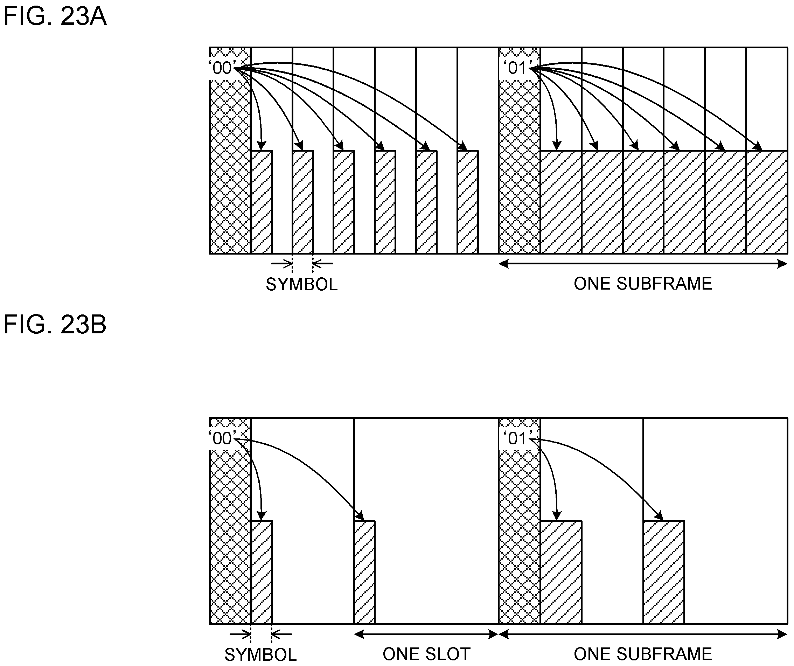

For example, if an sTTI is constituted by two symbols, if the sCFI value is "00," the user terminal judges that the sPDCCH is allocated to one symbol in each sTTI, and, if the sCFI value is "01," the user terminal judges that the sPDCCH is allocated to two symbols in each sTTI (see FIG. 23A).

Also, if an sTTI is constituted by one slot, if the sCFI value is "00," the user terminal judges that the sPDCCH is allocated to one symbol in each sTTI, and, if the sCFI value is "01," the user terminal judges that the sPDCCH is allocated to two symbols in each sTTI (see FIG. 23B).

In this manner, allocation of sPDCCHs can be controlled dynamically by reporting the time resources for sPDCCHs by using downlink control information (for example, sDCI that is transmitted in the PDCCH).

The value of the sCFI may be reported in the PCFICH, which is included in the first symbol of the subframe. Based on the demodulation result of the PCFICH, the user terminal identifies the CFI value, which represents the number of PDCCH symbols, and the sCFI value, which represents the number of sPDCCH symbols. The values of the CFI and the sCFI may be the same, or may be different. Also, the value of the PCFICH and the corresponding sCFI value may be configured by higher layer signaling such as RRC signaling and so on. By using the PCFICH like this, the signaling overhead incurred by reporting of sCFIs can be reduced.

### (Reporting Method 3)

The radio base station can configure the allocation of frequency resources (frequency-domain resource allocation) for sPDCCHs, in user terminals, in a semi-static manner or in a fixed manner. For example, the radio base station configures the frequency resources for sPDCCHs, in user terminals, via higher layer signaling. Alternatively, sPDCCH frequency resources may be configured in advance, on a fixed basis, by specification. Note that both frequency resources and time resources may be reported via higher layer signaling.

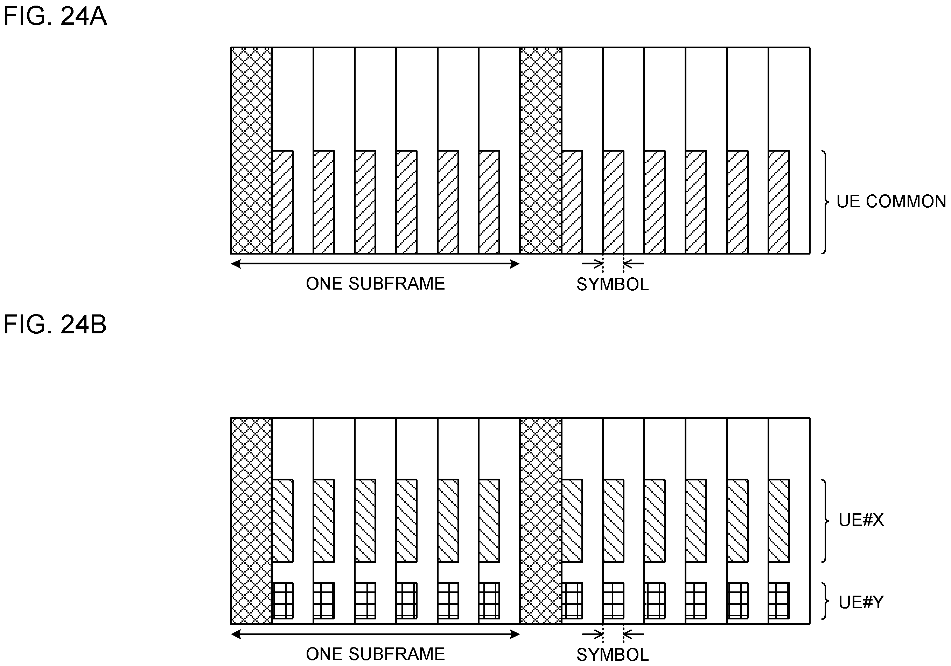

Also, sPDCCH frequency resources may be configured so that common frequency resources are used by predetermined user terminals (that is, the frequency resources may be cell-specific) (see FIG. 24A). FIG. 24A shows a structure, in which each sTTI is each constituted by two symbols, and in which the sPDCCH to be transmitted in each sTTI is allocated to predetermined frequency resources per cell.

Alternatively, separate (UE-specific) sPDCCH frequency resources may be configured in each user terminal (see FIG. 24B). FIG. 24B shows a structure, in which each sTTI is constituted by two symbols, and in which the sPDCCH to be transmitted in each sTTI is allocated to different frequency resources on a per user terminal basis.

### (Reporting Method 4)

The radio base station can configure the allocation of frequency resources for sPDCCHs, in user terminals, on a dynamic basis. For example, the radio base station configures frequency resources for sPDCCHs, in user terminals, by using downlink control information (also referred to as "slow DCI"), which is contained in an existing PDCCH, or by using other types of L1/L2 control information, and/or the like. Note that information related to frequency resources may be included in downlink control information in the sTTI that overlaps with the field where the PDCCH is allocated. Also, both frequency resources and time resources may be reported in downlink control information.

Similar to above reporting method 3, sPDCCH frequency resources may be configured so that common frequency resources are used by predetermined user terminals (that is, the frequency resources may be cell-specific) (see FIG. 24A). FIG. 24A shows a structure, in which each sTTI is each constituted by two symbols, and in which the sPDCCH to be transmitted in each sTTI is allocated to predetermined frequency resources per cell.

Alternatively, separate (UE-specific) sPDCCH frequency resources may be configured in each user terminal (see FIG. 24B). FIG. 24B shows a structure, in which each sTTI is constituted by two symbols, and in which the sPDCCH to be transmitted in each sTTI is allocated to different frequency resources on a per user terminal basis.

In this manner, allocation of sPDCCHs can be controlled dynamically by reporting the frequency resources for sPDCCHs by using downlink control information (for example, sDCI that is transmitted in the PDCCH).

sPDCCH frequency resources may be reported in the PCFICH, which is included in the first symbol of the subframe. Based on the demodulation result of the PCFICH, the user terminal identifies the CFI value, which represents the number of PDCCH symbols, and information related to sPDCCH frequency resources. The information related to sPDCCH frequency resources, corresponding to each PCFICH value, may be reported in advance through higher layer signaling. By using the PCFICH like this, the signaling overhead incurred by reporting of sPDCCH frequency resources can be reduced.

### (Radio Communication System)

Now, the structure of a radio communication system according to the present embodiment will be described below. In this radio communication system, the radio communication methods according to the above-described embodiments are employed. Note that the radio communication method according to each embodiment described above may be used alone or may be used in combination.

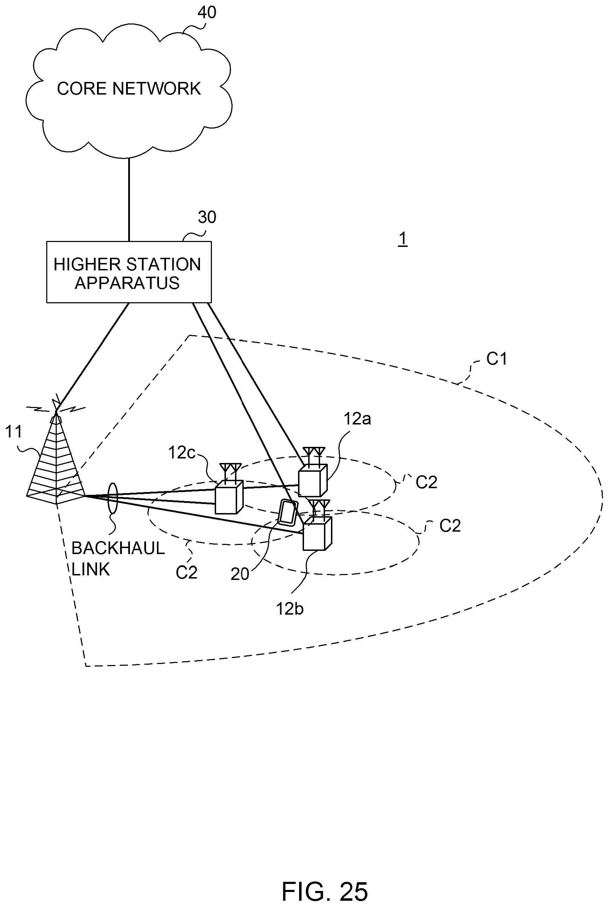

FIG. 25 is a diagram to show an example of a schematic structure of a radio communication system according to an embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 25 includes a radio base station 11 that forms a macro cell C 1, and radio base stations 12a to 12c that are placed within the macro cell C1 and that form small cells C2, which are narrower than the macro cell C1. Also, user terminals 20 are placed in the macro cell C1 and in each small cell C2. A structure may be adopted here in which different numerologies (for example, different TTI durations, and/or processing times, and so on) are used between cells. Note that a "numerology" refers to a set of communication parameters that characterize the design of signals in a given RAT and the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells. Note that a structure may be employed here in which an FDD carrier and/or a TDD carrier, which use shortened TTIs, may be included in one of the cells.

Between the user terminals 20 and the radio base station 11, communication can be carried out using a carrier of a relatively low frequency band (for example, 2 GHz) and a narrow bandwidth (referred to as, for example, an "existing carrier," a "legacy carrier," and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in the UL.

In the radio communication system 1, a DL data channel (PDSCH (Physical Downlink Shared CHannel), which is also referred to as, for example, a "DL shared channel"), which is shared by each user terminal 20, a broadcast channel (PBCH (Physical Broadcast CHannel)), L1/L2 control channels and so on are used as DL channels. User data, higher layer control information and SIBs (System Information Blocks) are communicated in the PDSCH. Also, the MIB (Master Information Block) is communicated in the PBCH.

The L1/L2 control channels include DL control channels (PDCCH (Physical Downlink Control CHannel), EPDCCH (Enhanced Physical Downlink Control CHannel), and/or other channels), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ delivery acknowledgement information (ACK/NACK) in response to the PUSCH is communicated by the PHICH. The EPDCCH is frequency-division-multiplexed with the PDSCH (downlink shared data channel) and used to communicate DCI and so on, like the PDCCH.

In the radio communication system 1, a UL data channel (PUSCH (Physical Uplink Shared CHannel), which is also referred to as "UL shared channel" and so on), which is shared by each user terminal 20, a UL control channel (PUCCH (Physical Uplink Control CHannel)), a random access channel (PRACH (Physical Random Access CHannel)) and so on are used as UL channels. User data, higher layer control information and so on are communicated by the PUSCH. Uplink control information (UCI (Uplink Control Information)), including at least one of delivery acknowledgment information (ACK/NACK) and radio quality information (CQI) and so on, is transmitted by the PUSCH or the PUCCH. By means of the PRACH, random access preambles for establishing connections with cells are communicated.

### (Radio Base Station)

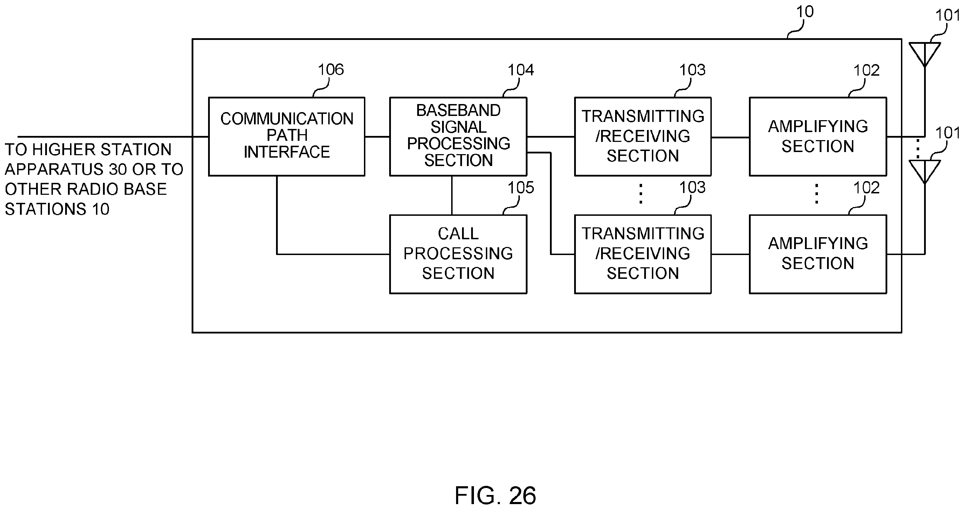

FIG. 26 is a diagram to show an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

DL data to be transmitted from the radio base station 10 to a user terminal 20 is input from the higher station apparatus 30 to the baseband signal processing section 104, via the communication path interface 106.

In the baseband signal processing section 104, the DL data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to the transmitting/receiving sections 103. Furthermore, DL control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, user data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 transmit DL signals (for example, DL control signals (DL control channels), DL data signals (DL data channels, DL shared channels and so on), DL reference signals (DM-RS, CSI-RS and so on), discovery signals, synchronization signals, broadcast signals and so on), and receive UL signals (for example, UL control signals (UL control channels), UL data signals (UL data channels, UL shared channels and so on), UL reference signals and so on).

To be more specific, the transmitting/receiving sections 103 transmit information about the pattern of allocating sTTs (configuration method) and/or the pattern of allocating sPDCCHs in each sTTI. For example, the transmitting/receiving sections 103 control transmission of information about time resources and/or frequency resources for sPDCCHs (third aspect).

The transmitting/receiving sections of the present invention are constituted by a transmitting/receiving section 103 and/or a communication path interface 106.

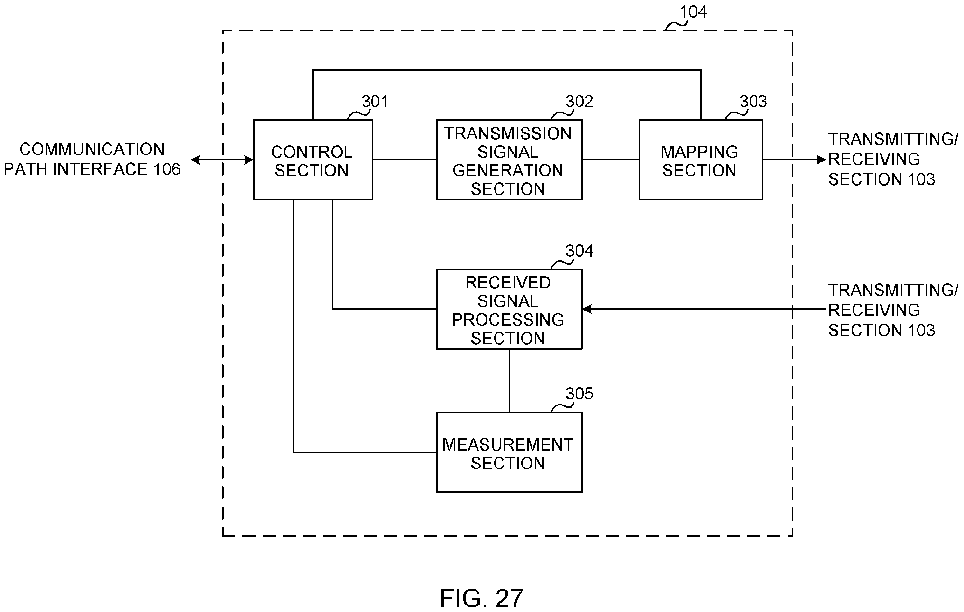

FIG. 27 is a diagram to show an example of a functional structure of a radio base station according to the present embodiment. Note that, although FIG. 27 primarily shows functional blocks that pertain to characteristic parts of the present embodiment, the radio base station 10 has other functional blocks that are necessary for radio communication as well. As shown in FIG. 27, the baseband signal processing section 104 at least has a control section 301, a transmission signal generation section 302, a mapping section 303, a received signal processing section 304 and a measurement section 305.

The control section 301 controls the whole of the radio base station 10. The control section 301 can be constituted by a controller, a control circuit or control apparatus that can be described based on general understanding of the technical field to which the present invention pertains.

The control section 301, for example, controls generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls scheduling (for example, resource allocation) of DL signals and/or UL signals. To be more specific, the control section 301 controls the transmission signal generation section 302, the mapping section 303 and the transmitting/receiving sections 103 to generate and transmit DCI (DL assignment) that includes DL data channel scheduling information and DCI (UL grant) that includes UL data channel scheduling information.

The control section 301 controls allocation of a PDCCH, which is transmitted in a first TTI (for example, a long TTI), and an sPDCCH, which is transmitted in a second TTI (for example, a short TTI). For example, the control section 301 controls allocation of sTTIs and/or a second downlink control channel based on in which time field a first downlink control channel, which is transmitted every first TTI, is allocated (first aspect and second aspect).

The transmission signal generation section 302 generates DL signals (DL control channels, DL data channels, DL reference signals such as DM-RSs, and so on) as commanded from the control section 301, and outputs the DL signals to the mapping section 303. The transmission signal generation section 302 can be constituted by a signal generator, a signal generating circuit or signal generating apparatus that can be described based on general understanding of the technical field to which the present invention pertains.

The mapping section 303 maps the DL signals generated in the transmission signal generation section 302 to predetermined radio resources, as commanded from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, UL signals transmitted from the user terminals 20 (UL control channels, UL data channels, UL reference signals and so on). For the received signal processing section 304, a signal processor, a signal processing circuit or signal processing apparatus that can be described based on general understanding of the technical field to which the present invention pertains can be used.

The received signal processing section 304 outputs the decoded information, acquired through the receiving processes, to the control section 301. For example, the received signal processing section 304 outputs at least one of a preamble, control information and UL data, to the control section 301. Also, the received signal processing section 304 outputs the received signals, the signals after the receiving processes and so on, to the measurement section 305.

The measurement section 305 conducts measurements with respect to the received signal. The measurement section 305 can be constituted by a measurer, a measurement circuit or measurement apparatus that can be described based on general understanding of the technical field to which the present invention pertains.

The measurement section 305 may measure the received power (for example, RSRP (Reference Signal Received Power)), the received quality (for example, RSRQ (Reference Signal Received Quality)), channel states and so on of the received signals. The measurement results may be output to the control section 301.

### (User Terminal)

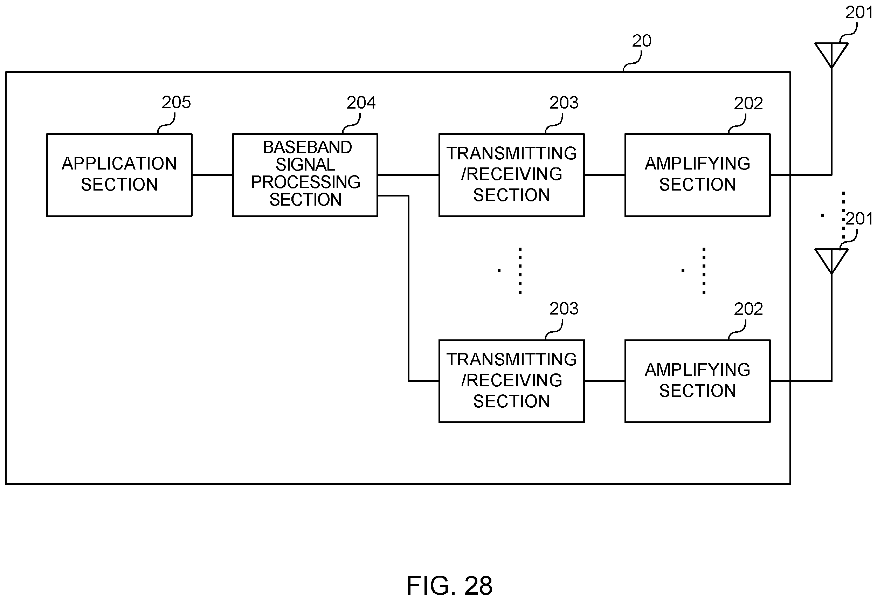

FIG. 28 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the DL signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process and so on. The DL data is forwarded to the application section 205. The application section 205 performs processes related to higher layers above the physical layer and the MAC layer, and so on. Also, in the DL data, system information and higher layer control information are also forwarded to the application section 205.

Meanwhile, UL data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive DL signals (for example, DL control signals (DL control channels), DL data signals (DL data channels, DL shared channels and so on), DL reference signals (DM-RS, CSI-RS and so on), discovery signals, synchronization signals, broadcast signals and so on), and transmit UL signals (for example, UL control signals (UL control channels), UL data signals (UL data channels, UL shared channels and so on), UL reference signals and so on).

To be more specific, the transmitting/receiving sections 203 at least receive sPDCCHs, which are transmitted in short TTIs. In addition, the transmitting/receiving sections 203 receive information about the allocation pattern of sTTIs (configuration method) and/or the allocation pattern of sPDCCHs in each sTTI. For example, the transmitting/receiving sections 203 control receipt of information about time resources and/or frequency resources for sPDCCHs (third aspect).

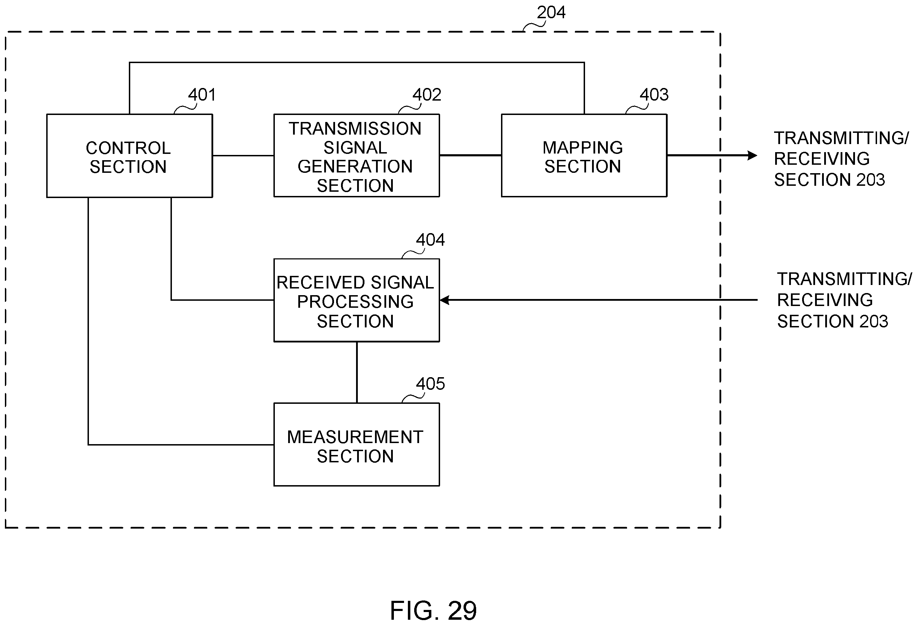

FIG. 29 is a diagram to show an example of a functional structure of a user terminal according to the present embodiment. Note that, although FIG. 29 primarily shows functional blocks that pertain to characteristic parts of the present embodiment, the user terminal 20 has other functional blocks that are necessary for radio communication as well. As shown in FIG. 29, the baseband signal processing section 204 provided in the user terminal 20 at least has a control section 401, a transmission signal generation section 402, a mapping section 403, a received signal processing section 404 and a measurement section 405.

The control section 401 controls the whole of the user terminal 20. For the control section 401, a controller, a control circuit or control apparatus that can be described based on general understanding of the technical field to which the present invention pertains can be used.

The control section 401, for example, controls generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires a DL control channel and a DL data channel, transmitted from the radio base station 10, from the received signal processing section 404. To be more specific, the control section 401 controls the transmitting/receiving sections 203 and the received signal processing section 404 to blind-decode the DL control channel and detect the DCI and/or sDCI, transmitted in subframes and/or shortened TTIs, and receive the DL data channel based on the DCI and/or sDCI.

The control section 401 controls receipt of a second downlink control channel (sPDCCH) based on in which time field a first downlink control channel (PDCCH), which is transmitted every first TTI (long TTI), is allocated (first aspect and second aspect). For example, the control section 401 controls receipt of the second downlink control channel in a first TTI, which includes the time field where the first downlink control channel is allocated, or in a first TTI which does not include the time field where the first downlink control channel is allocated.

The control section 401 can determine whether a second TTI is configured over two slots that constitute the first TTI based on the time field where the first downlink control channel is allocated and/or the TTI duration of the second TTI.

In addition, the control section 401 can identify the time field and/or the frequency field in which a second downlink control channel, which is transmitted in the second TTI, is allocated, based on higher layer signaling and/or L1/L2 control information.

The transmission signal generation section 402 generates UL signals (UL control channels, UL data signals, UL reference signals and so on) as commanded from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

The mapping section 403 maps the UL signals generated in the transmission signal generation section 402 to radio resources as commanded from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, DL signals transmitted from the radio base station 10 (DL control channels, DL data channels, DL reference signals and so on). The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

Based on commands from control section 401, the received signal processing section 404 performs blind decoding of a DL control channel, which schedules transmission and/or receipt of a DL data channel, and performs receiving processes for the DL data channel based on this DCI. In addition, the received signal processing section 404 estimates channel gain based on the DM-RS or the CRS, and demodulates the DL data channel based on the estimated channel gain.

The received signal processing section 404 outputs the decoded information, acquired through the receiving processes, to the control section 401. The received signal processing section 404 outputs, for example, broadcast information, system information, RRC signaling, DCI and so on, to the control section 401. The received signal processing section 404 may output the decoding result of the data to the control section 401. Also, the received signal processing section 404 outputs the received signals, the signals after the receiving processes and so on, to the measurement section 405.

The measurement section 405 conducts measurements with respect to the received signals. For example, the measurement section 405 measures channel states based on reference signals (CSI-RSs) for channel state measurements, transmitted from the radio base station. The measurement section 405 may measure, for example, the received signals' received power (for example, RSRP), DL received quality (for example, RSRQ) and so on. The measurement results may be output to the control section 401. The measurement section 405 can be constituted by a measurer, a measurement circuit or measurement apparatus that can be described based on general understanding of the technical field to which the present invention pertains.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

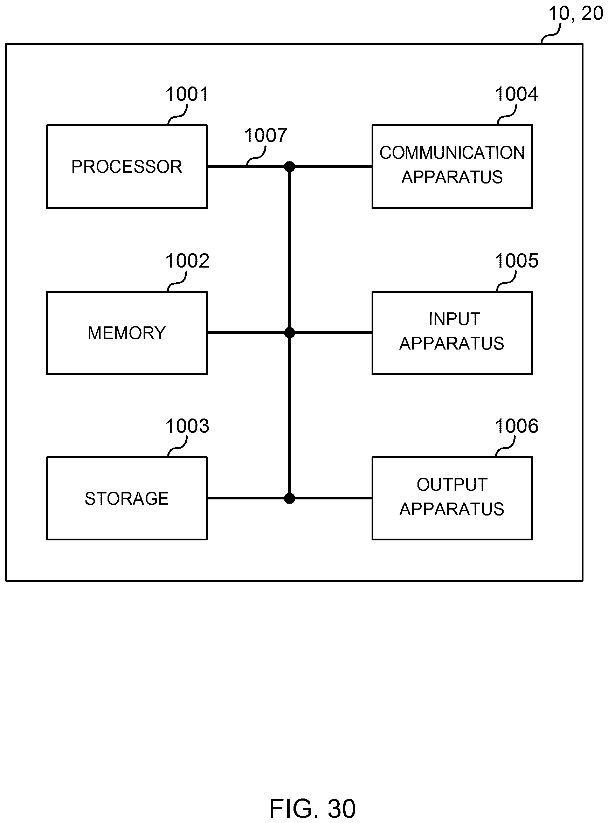

For example, the radio base station, user terminals and so on according to one embodiment of the present invention may function as a computer that executes the processes of the radio communication method of the present invention. FIG. 30 is a diagram to show an example hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented either simultaneously or in sequence, or in different manners, on two or more processors. Note that the processor 1001 may be implemented with one or more chips.

Each function of the radio base station 10 and user terminal 20 is implemented by allowing predetermined software (programs) to be read on hardware such as the processor 1001 and the memory 1002, and by allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frame, a subframe, a slot and a symbol may be each called by other applicable names. For example, one subframe may be referred to as a "transmission time interval (TTI)," or a plurality of consecutive subframes may be referred to as a "TTI," and one slot may be referred to as a "TTI." That is, a subframe and a TTI may be a subframe (1 ms) in existing LTE, may have a shorter period than 1 ms (for example, one to thirteen symbols), or may have a longer period than 1 ms.

Here, a TTI refers to the minimum time unit of scheduling in radio communication, for example. For example, in LTE systems, a radio base station schedules radio resources (such as the frequency bandwidth and transmission power that can be used in each user terminal) to allocate to each user terminal in TTI units. Note that the definition of TTIs is not limited to this. TTIs may be the time unit for transmitting channel-encoded data packets (transport blocks), or may be the unit of processing in scheduling, link adaptation and so on.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) duration can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and /or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a structure in which communication between a radio base station and a user terminal is replaced with communication among a plurality of user terminals (D2D (Device-to-Device)). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method of distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency fields, microwave regions and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

## Claims

1. A terminal (20) comprising:
a receiving section (203) adapted to receive a downlink control channel, PDCCH; and
a control section (401) adapted to control an allocation pattern of transmission time intervals that is applied to a subframe having two slots, each slot having three transmission time intervals each having a different number of symbols, each slot having seven symbols,
wherein the control section (401) is adapted to perform a receiving process by selecting one allocation pattern from a plurality of allocation patterns depending on a number of symbols allocated to the PDCCH in one subframe, and
wherein each allocation pattern has a transmission time interval formed with three symbols and two transmission time intervals each formed with two symbols.

2. A radio communication method for a terminal, comprising:
receiving a downlink control channel, PDCCH; and
controlling an allocation pattern of transmission time intervals that is applied to a subframe having two slots, each slot having three transmission time intervals each having a different number of symbols, each slot having seven symbols,
wherein the terminal performs a receiving process by selecting one allocation pattern from a plurality of allocation patterns depending on a number of symbols allocated to the PDCCH in one subframe, and
wherein each allocation pattern has a transmission time interval formed with three symbols and two transmission time intervals each formed with two symbols.

3. A radio base station (10) comprising:
a transmitting section (103) adapted to transmit a downlink control channel, PDCCH; and
a control section (301) adapted to control an allocation pattern of transmission time intervals that is applied to a subframe having two slots, each slot having three transmission time intervals each having a different number of symbols, each slot having seven symbols,
wherein the control section (301) is adapted to perform a transmission process by selecting one allocation pattern from a plurality of allocation patterns depending on a number of symbols allocated to the PDCCH in one subframe, and
wherein each allocation pattern has a transmission time interval formed with three symbols and two transmission time intervals each formed with two symbols.

4. A system comprising a terminal (20) and a base station (10), wherein:
the terminal (20) comprises:
a receiving section (203) adapted to receive a downlink control channel, PDCCH; and
a control section (401) adapted to control an allocation pattern of transmission time intervals that is applied to a subframe having two of slots, each slot having three transmission time intervals each having a different number of symbols, each slot having seven symbols, and
the base station (10) comprises:
a transmitting section (103) adapted to transmit the PDCCH,
wherein the control section (401) is adapted to perform a receiving process by selecting one allocation pattern from a plurality of allocation patterns depending on a number of symbols allocated to the PDCCH in one subframe, and
wherein each allocation pattern has a transmission time interval formed with three symbols and two transmission time intervals each formed with two symbols.

## Patentansprüche

1. Endgerät (20), umfassend:
einen Empfangsabschnitt (203), der angepasst ist, um einen Abwärtsverbindungssteuerkanal, PDCCH, zu empfangen; und
einen Steuerabschnitt (401), der angepasst ist, um ein Zuweisungsmuster von Sendezeitintervallen zu steuern, das auf einen Teilrahmen mit zwei Schlitzen angewendet wird, wobei jeder Schlitz drei Sendezeitintervalle mit jeweils einer unterschiedlichen Anzahl von Symbolen aufweist, wobei jeder Schlitz sieben Symbole hat,
wobei der Steuerabschnitt (401) angepasst ist, um einen Empfangsprozess durchzuführen, indem er ein Zuweisungsmuster aus einer Vielzahl von Zuweisungsmustern in Abhängigkeit von einer Anzahl von Symbolen auswählt, die dem PDCCH in einem Teilrahmen zugewiesen sind, und
wobei jedes Zuweisungsmuster ein mit drei Symbolen gebildetes Sendezeitintervall und zwei mit jeweils zwei Symbolen gebildete Sendezeitintervalle aufweist.

2. Funkkommunikationsverfahren für ein Endgerät, umfassend:
Empfangen eines Abwärtsverbindungssteuerkanals, PDCCH; und
Steuern eines Zuweisungsmusters von Sendezeitintervallen, das auf einen Teilrahmen mit zwei Schlitzen angewendet wird, wobei jeder Schlitz drei Sendezeitintervalle mit jeweils einer unterschiedlichen Anzahl von Symbolen aufweist, wobei jeder Schlitz sieben Symbole aufweist,
wobei das Endgerät einen Empfangsprozess durchführt, indem es ein Zuweisungsmuster aus einer Vielzahl von Zuweisungsmustern in Abhängigkeit von einer Anzahl von Symbolen auswählt, die dem PDCCH in einem Teilrahmen zugewiesen sind, und
wobei jedes Zuweisungsmuster ein mit drei Symbolen gebildetes Sendezeitintervall und zwei mit jeweils zwei Symbolen gebildete Sendezeitintervalle aufweist.

3. Funkbasisstation (10), umfassend:
einen Sendeabschnitt (103), der angepasst ist, um einen Abwärtsverbindungssteuerkanal, PDCCH, zu senden; und
einen Steuerabschnitt (301), der angepasst ist, um ein Zuweisungsmuster von Sendezeitintervallen zu steuern, das auf einen Teilrahmen mit zwei Schlitzen angewendet wird, wobei jeder Schlitz drei Sendezeitintervalle aufweist, die jeweils eine unterschiedliche Anzahl von Symbolen aufweisen, wobei jeder Schlitz sieben Symbole aufweist,
wobei der Steuerabschnitt (301) angepasst ist, um einen Sendeprozess durch Auswahl eines Zuweisungsmusters aus einer Vielzahl von Zuweisungsmustern in Abhängigkeit von einer Anzahl von Symbolen, die dem PDCCH in einem Teilrahmen zugewiesen sind, durchzuführen, und
wobei jedes Zuweisungsmuster ein mit drei Symbolen gebildetes Sendezeitintervall und zwei mit jeweils zwei Symbolen gebildete Sendezeitintervalle aufweist.

4. System, umfassend ein Endgerät (20) und eine Basisstation (10), wobei:
das Endgerät (20) umfasst:
einen Empfangsabschnitt (203), der angepasst ist, um einen Abwärtsverbindungssteuerkanal, PDCCH, zu empfangen; und
einen Steuerabschnitt (401), der angepasst ist, um ein Zuweisungsmuster von Sendezeitintervallen zu steuern, das auf einen Teilrahmen mit zwei Schlitzen angewendet wird, wobei jeder Schlitz drei Sendezeitintervalle aufweist, die jeweils eine unterschiedliche Anzahl von Symbolen aufweisen, wobei jeder Schlitz sieben Symbole aufweist, und
die Basisstation (10) umfasst:
einen Sendeabschnitt (103), der angepasst ist, um den PDCCH zu senden,
wobei der Steuerabschnitt (401) angepasst ist, um einen Empfangsprozess durchzuführen, indem er ein Zuweisungsmuster aus einer Vielzahl von Zuweisungsmustern in Abhängigkeit von einer Anzahl von Symbolen auswählt, die dem PDCCH in einem Teilrahmen zugewiesen sind, und
wobei jedes Zuweisungsmuster ein mit drei Symbolen gebildetes Sendezeitintervall und zwei mit jeweils zwei Symbolen gebildete Sendezeitintervalle aufweist.

## Revendications

1. Terminal (20) comprenant :
une section de réception (203) conçue pour recevoir un canal de commande de liaison descendante, PDCCH ; et
une section de commande (401) conçue pour commander un schéma d'attribution d'intervalles de temps de transmission qui est appliqué à une sous-trame présentant deux créneaux, chaque créneau présentant trois intervalles de temps de transmission présentant chacun un nombre différent de symboles, chaque créneau présentant sept symboles,
dans lequel la section de commande (401) est conçue pour mettre en oeuvre un processus de réception en sélectionnant un schéma d'attribution parmi plusieurs schémas d'attribution en fonction du nombre de symboles attribués au PDCCH dans une sous-trame, et
dans lequel chaque schéma d'attribution présente un intervalle de temps de transmission formé de trois symboles et deux intervalles de temps de transmission formés chacun de deux symboles.

2. Procédé de communication radio pour un terminal, comprenant :
la réception d'un canal de commande de liaison descendante, PDCCH ; et
la commande d'un schéma d'attribution d'intervalles de temps de transmission appliqué à une sous-trame présentant deux créneaux, chaque créneau présentant trois intervalles de temps de transmission présentant chacun un nombre différent de symboles, chaque créneau présentant sept symboles,
dans lequel le terminal met en oeuvre un processus de réception en sélectionnant un schéma d'attribution parmi plusieurs schémas d'attribution en fonction du nombre de symboles attribués au PDCCH dans une sous-trame, et
dans lequel chaque schéma d'attribution présente un intervalle de temps de transmission formé de trois symboles et deux intervalles de temps de transmission formés chacun de deux symboles.

3. Station de base (10) radio comprenant :
une section de transmission (103) conçue pour transmettre un canal de commande de liaison descendante, PDCCH ; et
une section de commande (301) conçue pour commander un schéma d'attribution d'intervalles de temps de transmission qui est appliqué à une sous-trame présentant deux créneaux, chaque créneau présentant trois intervalles de temps de transmission présentant chacun un nombre différent de symboles, chaque créneau présentant sept symboles,
dans lequel la section de commande (301) est conçue pour mettre en oeuvre un processus de transmission en sélectionnant un schéma d'attribution parmi plusieurs schémas d'attribution en fonction du nombre de symboles attribués au PDCCH dans une sous-trame, et
dans lequel chaque schéma d'attribution présente un intervalle de temps de transmission formé de trois symboles et deux intervalles de temps de transmission formés chacun de deux symboles.

4. Système comprenant un terminal (20) et une station de base (10), dans lequel :
le terminal (20) comprend :
une section de réception (203) conçue pour recevoir un canal de commande de liaison descendante, PDCCH ; et
une section de commande (401) conçue pour commander un schéma d'attribution d'intervalles de temps de transmission appliqué à une sous-trame présentant deux créneaux, chaque créneau présentant trois intervalles de temps de transmission présentant chacun un nombre différent de symboles, chaque créneau présentant sept symboles, et
la station de base (10) comprend :
une section de transmission (103) conçue pour transmettre le PDCCH,
dans lequel la section de commande (401) est conçue pour mettre en oeuvre un processus de réception en sélectionnant un schéma d'attribution parmi plusieurs schémas d'attribution en fonction du nombre de symboles attribués au PDCCH dans une sous-trame, et
dans lequel chaque schéma d'attribution présente un intervalle de temps de transmission formé de trois symboles et deux intervalles de temps de transmission formés chacun de deux symboles.
